# EUROPEAN PATENT SPECIFICATION

(11) **EP 3 257 732 B1**
(45) Date of publication and mention of the grant of the patent: **15.04.2020**
(21) Application number: 17176356.8
(22) Date of filing: 16.06.2017
(51) Int. Cl.: B62K 25/08, B62K 5/00, B62K 5/10, B62K 5/08, B62K 5/027, B62K 5/05

(54) **VEHICLE**
FAHRZEUG
VÉHICULE

(30) Priority: 16.06.2016 JP 2016120213
(43) Date of publication of application: 20.12.2017
(73) Proprietor: Yamaha Hatsudoki Kabushiki Kaisha, Iwata-shi Shizuoka 438-8501 (JP)
(72) Inventor: OHNO, Kohsuke, Iwata-shi, Shizuoka 438-8501 (JP); IKEDA, Kota, Iwata-shi, Shizuoka 438-8501 (JP); TAKANO, Kazuhisa, Iwata-shi, Shizuoka 438-8501 (JP)
(74) Representative: Grünecker Patent- und Rechtsanwälte PartG mbB

(56) References cited:
- EP-A1- 2 399 811
- EP-A2- 1 864 843
- EP-A2- 2 712 796
- JP-A- 2008 168 893

## Description

### Technical Field

The present disclosure relates to a vehicle equipped with a leanable body frame and two front wheels.

### Background Art

A vehicle described in Patent Literature 1 comprises a body frame that leans to the left or right of the vehicle when the vehicle turns left or right and two front wheels that are arranged side by side in a left-right direction of the body frame. This type of vehicle is a vehicle which is able to turn with its body frame leaning from a vertical direction. More specifically, the body frame leans to the right of the vehicle when the vehicle turns to the right, while when the vehicle turns to the left, the body frame leans to the left of the vehicle.

The vehicle comprises a link mechanism. The link mechanism is disposed above the two front wheels. The link mechanism is configured so as to change positions of the two front wheels relative to the body frame to thereby cause the body frame to lean to the left or right of the vehicle.

The vehicle comprises a left suspension device and a right suspension device. A lower portion of the left suspension device supports one (a left front wheel) of the two front wheels. An upper portion of the left suspension device is coupled with the link mechanism. The left suspension device attenuates an upward displacement of the left front wheel in an up-down direction of the body frame relative to the upper portion thereof. A lower portion of the right suspension device supports one (a right front wheel) of the two front wheels. An upper portion of the right suspension device is coupled with the link mechanism. The right suspension device attenuates an upward displacement of the right front wheel in the up-down direction of the body frame relative to the upper portion thereof.

### Prior Art Literature

[Patent Literature 1] Japanese Patent Publication No. 2008-168893

EP 2399811 A1 discloses vehicle according to the preamble of claim 1.

### Summary of Disclosure

It is required to suppress the enlargement in size of a vehicle comprising a leanable body frame, two front wheels, a link mechanism, a left suspension device and a right suspension device.

In order to satisfy the above requirement, there is provided a vehicle comprising:
a body frame;
a left front wheel and a right front wheel that are arranged side by side in a left-right direction of the body frame;
a link mechanism disposed above the left front wheel and the right front wheel in an up-down direction of the body frame, and configured to change positions of the left front wheel and the right front wheel relative to the body frame to cause the body frame to lean to left or right of the vehicle;
a left suspension device configured to attenuate displacement motion of the left front wheel relative to the link mechanism in the up-down direction of the body frame; and
a right suspension device configured to attenuate displacement motion of the right front wheel relative to the link mechanism in the up-down direction of the body frame,
wherein the link mechanism comprises an upper cross member, a lower cross member, a left side member and a right side member;
wherein the upper cross member, the lower cross member, the left side member and the right side member are turnably connected with one another such that the upper cross member and the lower cross member are held in postures which are parallel to each other, and such that the left side member and the right side member are held in postures which are parallel to each other;
   wherein the left suspension device comprises:
      a left shock absorbing device supporting the left front wheel and configured to perform a telescopic action along a left telescoping axis extending in the up-down direction of the body frame; and
      a left coupling member supporting the left shock absorbing device and coupled with the left side member while being configured to turn about a left steering axis extending in the up-down direction of the body frame;
   wherein the right suspension device comprises:
      a right shock absorbing device supporting the right front wheel and configured to perform a telescopic action along a right telescoping axis extending in the up-down direction of the body frame; and
      a right coupling member supporting the right shock absorbing device and coupled with the right side member while being configured to turn about a right steering axis extending in the up-down direction of the body frame;
   wherein the left front wheel is inclined in such a way that an upper portion of the left front wheel lies further away from the left telescoping axis than a lower portion of the left front wheel; and
   wherein the right front wheel is inclined in such a way that an upper portion of the right front wheel lies further away from the right telescoping axis than a lower portion of the right front wheel.

The upper portion of the left front wheel is a portion which lies above the left wheel axle. The expression "a portion which lies above the left wheel axle" implies a portion which lies above the left wheel axle within a left plane which perpendicularly intersects the left wheel axle at a widthwise center of the left front wheel. The lower portion of the left front wheel is a portion which lies below the left wheel axle. The expression "a portion which lies below the left wheel axle" implies a portion which lies below the left wheel axle within the left plane.

The upper portion of the right front wheel is a portion which lies above the right wheel axle. The expression "a portion which lies above the right wheel axle" implies a portion which lies above the right wheel axle within a right plane which perpendicularly intersects the right wheel axle at a widthwise center of the right front wheel. The lower portion of the right front wheel is a portion which lies below the right wheel axle. The expression "a portion which lies below the right wheel axle" implies a portion which lies below the right wheel axle within the right plane.

Since the upper portion of the left front wheel lies further away from the left telescoping axis that passes through the left shock absorbing device than the lower portion of the left front wheel, an extra space can be secured between the upper portion of the left front wheel and the left shock absorbing device. Thus, the space defined between the upper portion of the left front wheel and the left shock absorbing device can be utilized as a space where to dispose peripheral parts of the left front wheel and the left shock absorbing device which are conventionally provided in separate portions. On the other hand, part of the lower portion of the left front wheel can be disposed directly below the left shock absorbing device in the up-down direction of the body frame. Thus, an extra space which is originally defined directly below the left shock absorbing device can be utilized effectively. As a result, it is possible to enhance the utilization efficiency of the space including the left front wheel and the left suspension device.

Since the upper portion of the right front wheel lies further away from the right telescoping axis that passes through the right shock absorbing device than the lower portion of the right front wheel, an extra space can be secured between the upper portion of the right front wheel and the right shock absorbing device. Thus, the space defined between the upper portion of the right front wheel and the right shock absorbing device can be utilized as a space where to dispose peripheral parts of the right front wheel and the right shock absorbing device which are conventionally provided in separate portions. On the other hand, part of the lower portion of the right front wheel can be disposed directly below the right shock absorbing device in the up-down direction of the body frame. Thus, an extra space which is originally defined directly below the right shock absorbing device can be utilized effectively. As a result, it is possible to enhance the utilization efficiency of the space including the right front wheel and the right suspension device.

Consequently, it is possible to suppress the enlargement in size of the vehicle which comprises the leanable body frame, the two front wheels, the link mechanism, the left suspension device and the right suspension device.

The above vehicle may be configured such that:
the left front wheel is inclined relative to a vertical direction (gravity direction);
an inclination angle of the left front wheel relative to the vertical direction is greater than an inclination angle of the left telescoping axis relative to the vertical direction;
the right front wheel is inclined relative to the vertical direction; and
an inclination angle of the right front wheel relative to the vertical direction is greater than an inclination angle of the right telescoping axis relative to the vertical direction.

According to the configuration described above, it is possible to make short a distance which is defined in the left-right direction of the body frame between the left telescoping axis and the left steering axis which passes through the left front wheel and serves as a turning center of the left coupling member. Consequently, it is possible to suppress the enlargement in size of the left coupling member. Similarly, it is possible to make short a distance which is defined in the left-right direction of the body frame between the right telescoping axis and the right steering axis which passes through the right front wheel and serves as a turning center of the right coupling member. Consequently, it is possible to suppress the enlargement in size of the right coupling member.

Therefore, it is possible to suppress the enlargement in size of the vehicle which comprises the leanable body frame, the two front wheels, the link mechanism, the left suspension device and the right suspension device.

The above vehicle may be configured such that:
the left shock absorbing device is disposed on the left of the left front wheel in the left-right direction of the body frame; and
the right shock absorbing device is disposed on the right of the right front wheel in the left-right direction of the body frame.

According to the configuration described above, a distance between the upper portion of the left front wheel and the upper portion of the right front wheel in the left-right direction of the body frame is made shorter than a distance between the lower portion of the left front wheel and the lower portion of the right front wheel in the same direction. When compared with a configuration in which the left plane extends parallel to the left telescoping axis and the right plane extends parallel to the right telescoping axis, since the distance between the left steering axis and the left telescoping axis as well as the distance between the right steering axis and the right telescoping axis can be made short. In a case where a tread width between the left front wheel and the right front wheel remains the same in both the configurations, the distance between the left shock absorbing device and the right shock absorbing device in the left-right direction of the body frame can be made shorter. Consequently, it is possible to suppress the enlargement in size of the vehicle which comprises the leanable body frame, the two front wheels, the link mechanism, the left suspension device and the right suspension device.

Alternatively, the above vehicle may be configured such that:
the left shock absorbing device is disposed on the right of the left front wheel in the left-right direction of the body frame; and
the right shock absorbing device is disposed on the left of the right front wheel in the left-right direction of the body frame.

According to the configuration described above, a distance between the upper portion of the left front wheel and the upper portion of the right front wheel in the left-right direction of the body frame is made longer than a distance between the lower portion of the left front wheel and the lower portion of the right front wheel in the same direction. When compared with a configuration in which the left plane extends parallel to the left telescoping axis as well as the right plane extends parallel to the right telescoping axis, in a case where a tread width between the left front wheel and the right front wheel remains the same in both the configurations, a distance between the left telescoping axis and the right telescoping axis can be made long. In other words, if it is possible to ensure an original distance which is necessary to avoid the interference of the left shock absorbing device with the right shock absorbing device, since a distance between the left steering axis and the left telescoping axis as well as a distance between the right steering axis and the right telescoping axis can be made short, a distance between the left side member and the right side member in the left-right direction of the body frame can be made short. Consequently, it is possible to suppress the enlargement in size of the vehicle which comprises the leanable body frame, the two front wheels, the link mechanism, the left suspension device and the right suspension device.

Alternatively, the above vehicle may be configured such that:
the left telescoping axis is inclined relative to a vertical direction;
an inclination angle of the left telescoping axis relative to the vertical direction is greater than an inclination angle of the left front wheel relative to the vertical direction;
the right telescoping axis is inclined relative to the vertical direction; and
an inclination angle of the right telescoping axis relative to the vertical direction is greater than an inclination angle of the right front wheel relative to the vertical direction.

There is need to increase a resistance force against the telescopic actions of the left shock absorbing device and the right shock absorbing device when the left shock absorbing device and the right shock absorbing device perform telescopic actions at the same phase. According to the configuration described above, a tread width between the left front wheel and the right front wheel in the left-right direction of the body frame changes in accordance with the telescopic actions of the left shock absorbing device and the right shock absorbing device at the same phase. Here, frictional resistance produced between the ground contact surfaces of the two front wheels and the road surface may be added to the left shock absorbing device and the right shock absorbing device as resistance against the telescopic actions of the left shock absorbing device and the right shock absorbing device. It is thus possible to meet the need described above while suppressing the enlargement in size of the vehicle comprising the leanable body frame, the two front wheels, the link mechanism, the left suspension device and the right suspension device.

The above vehicle may be configured such that:
the left shock absorbing device is formed with a left through hole supporting a left wheel axle rotatably;
the left through hole extends so as to intersect the left telescoping axis non-perpendicularly when viewed from a front-rear direction of the body frame;
the right shock absorbing device is formed with a right through hole supporting a right wheel axle rotatably; and
the right through hole extends so as to intersect the right telescoping axis non-perpendicularly when viewed from the front-rear direction of the body frame.

According to the configuration described above, the left front wheel and the right front wheel can be inclined from the vertical direction in the way described above with the simple configuration.

The above vehicle may be configured such that:
the left shock absorbing device comprises a left upper portion and a left lower portion that are configured to perform relative displacement along the left telescoping axis;
the left shock absorbing device further comprises:
   a left guide portion coupled with one of the left upper portion and the left lower portion; and
   a left guided portion coupled with the other one of the left upper portion and the left lower portion, and configured to displace relative to the left guide portion in a direction parallel to the left telescoping axis;
the left guide portion and the left guided portion are configured to restrict relative turning of the left upper portion and the left lower portion;
the right shock absorbing device comprises a right upper portion and a right lower portion that are configured to perform relative displacement along the right telescoping axis;
the right shock absorbing device further comprises:
   a right guide portion coupled with one of the right upper portion and the right lower portion; and
   a right guided portion coupled with the other one of the right upper portion and the right lower portion, and configured to displace relative to the right guide portion in a direction parallel to the right telescoping axis; and
the right guide portion and the right guided portion are configured to restrict relative turning of the right upper portion and the right lower portion.

According to the configuration described above, when compared with a so-called leading arm configuration, it is possible to suppress the enlargement in size of the vehicle. In the leading arm configuration, each shock absorbing device is coupled with, via a rotary link, a member which is not so designed as to telescope. Hence, it is difficult to ensure a long telescoping stroke for the shock absorbing device. Thus, there is a tendency that the shock absorbing device is enlarged in size in order to obtain a desired shock absorbing performance. In other words, there is a tendency that diameters of upper and lower portions which are configured to change their relative positions are enlarged. According to the configuration described above, since it is possible to suppress the enlargement in size of the structures of the left shock absorbing device and the right shock absorbing device for ensuring the predetermined telescoping stroke, even though the left front wheel is disposed in proximity to the left shock absorbing device as well as the right front wheel is disposed in proximity to the right shock absorbing device, it is easy to avoid the interference of the relevant members.

The above vehicle may be configured such that:
a ground contact surface of the left front wheel is curved relative to a direction parallel to a left wheel axle of the left front wheel; and
a ground contact surface of the right front wheel is curved relative to a direction parallel to a right wheel axle of the right front wheel.

According to the configuration described above, it is easy to incline the left front wheel and the right front wheel from the vertical direction in the way described above.

### Brief Description of Drawings

Fig. 1 is a left side view entirely showing a vehicle according to one embodiment.
Fig. 2 is a left side view showing a front portion of the vehicle of Fig. 1 in an enlarged manner.
Fig. 3 is a front view showing the front portion of the vehicle of Fig. 1.
Fig. 4 is a plan view showing the front portion of the vehicle of Fig. 1.
Fig. 5 is a plan view showing the front portion of the vehicle of Fig. 1 when steering is performed.
Fig. 6 is a front view showing the front portion of the vehicle of Fig. 1 when leftward leaning is performed.
Fig. 7 is a front view showing the front portion of the vehicle of Fig. 1 when steering and leftward leaning are performed.
Fig. 8 is a front view schematically showing the front portion of the vehicle of Fig. 1.
Fig. 9 is a front view schematically showing a first modified example of the vehicle of Fig. 1.
Fig. 10 is a front view schematically showing a second modified example of the vehicle of Fig. 1.
Fig. 11 is a front view schematically showing a third modified example of the vehicle of Fig. 1.
Fig. 12 is a front view schematically showing a fourth modified example of the vehicle of Fig. 1.

### Detailed Description of Embodiments

Referring to the accompanying drawings, an exemplary embodiment will be described in detail below.

In the accompanying drawings, an arrow F denotes a front or forward direction of a vehicle. An arrow B denotes a back/rear or backward/rearward direction of the vehicle. An arrow U denotes an up or upward direction of the vehicle. An arrow D denotes a down or downward direction of the vehicle. An arrow R denotes a right or rightward direction of the vehicle. An arrow L denotes a left or leftward direction of the vehicle.

A vehicle turns with a body frame being caused to lean to the left or right of the vehicle from a vertical direction. Then, in addition to the directions based on the vehicle, directions based on the body frame will be defined. In the accompanying drawings, an arrow FF denotes a front or forward direction of the body frame. An arrow FB denotes a back/rear or backward/rearward of the body frame. An arrow FU denotes an up or upward direction of the body frame. An arrow FD denotes a down or downward direction of the body frame. An arrow FR denotes a right or rightward direction of the body frame. An arrow FL denotes a left or leftward direction of the body frame.

In this description, a "front-rear direction of the body frame," a "left-right direction of the body frame" and an "up-down direction of the body frame" mean a front-rear direction, a left-right direction and an up-down direction based on the body frame when viewed from a rider who rides the vehicle. "A side of or sideways of the body frame" means directly on the right or left in the left-right direction of the body frame.

In this description, an expression "extending in the front-rear direction of the vehicle body frame" includes a fact that it extends while being inclined in relation to the front-rear direction of the vehicle body frame and means that it extends in a direction closer to the front-rear direction of the vehicle body frame than the left-right direction and up-down direction of the vehicle body frame.

In this description, an expression "extending in the left-right direction of the vehicle body frame" includes a fact that it extends while being inclined in relation to the left-right direction of the vehicle body frame and means that it extends in a direction closer to the left-right direction of the vehicle body frame than the front-rear direction and up-down direction of the vehicle body frame.

In this description, an expression "extending in the up-down direction of the vehicle body frame" includes a fact that it extends while being inclined in relation to the up-down direction of the vehicle body frame and means that it extends in a direction closer to the up-down direction of the vehicle body frame than the left-right direction and front-rear direction of the vehicle body frame.

In this description, an expression reading the "vehicle is standing upright or in an upright state" or the "body frame is standing upright or in the upright state" means a state in which the vehicle is not steered at all and the up-down direction of the body frame coincides with the vertical direction. In this state, the directions based on the vehicle coincide with the directions based on the body frame. When the vehicle is turning with the body frame caused to lean to the left or right from the vertical direction, the left-right direction of the vehicle does not coincide with the left-right direction of the body frame. Similarly, the up-down direction of the vehicle does not coincide with the up-down direction of the body frame. However, the front-rear direction of the vehicle coincides with the front-rear direction of the body frame.

In this description, an expression reading "directly on the left of a member A in the left-right direction of the body frame" denotes a space through which the member A passes when the member A is translated to the left in the left-right direction of the body frame. An expression reading "directly on the right of the member A" is also defined in the same way.

In this description, an expression reading "on the left of the member A in the left-right direction of the body frame" includes not only the space through which the member A passes when the member A is translated to the left in the left-right direction of the body frame but also a space which expands from the space in directions which are at right angles to the left-right direction of the body frame. An expression reading "on the right of the member A" is also defined in the same way.

In this description, an expression reading "directly above the member A in the up-down direction of the body frame" denotes a space through which the member A passes when the member A is translated upwards in the up-down direction of the body frame. An expression reading "directly below the member A" is also defined in the same way.

In this description, an expression reading "above the member A in the up-down direction of the body frame" includes not only the space through which the member A passes when the member A is translated upwards in the up-down direction of the body frame but also a space which expands from the space in directions which are at right angles to the up-down direction of the body frame. An expression reading "below the member A" is also defined in the same way.

In this description, an expression reading "directly ahead of the member A in the front-rear direction of the body frame" denotes a space through which the member A passes when the member A is translated to the front in the front-rear direction of the body frame. An expression reading "directly behind the member A" is also defined in the same way.

In this description, an expression reading "ahead of the member A in the front-rear direction of the body frame" includes not only the space through which the member A passes when the member A is translated to the front in the front-rear direction of the body frame but also a space which expands from the space in directions which are at right angles to the front-rear direction of the body frame. An expression reading "behind the member A" is also defined in the same way.

In this description, "rotation, rotating or rotated" means that a member is displaced at an angle of 360 degrees or more about an axis thereof. In this description, "turn, turning or turned" means that a member is displaced at an angle less than 360 degrees about an axis thereof.

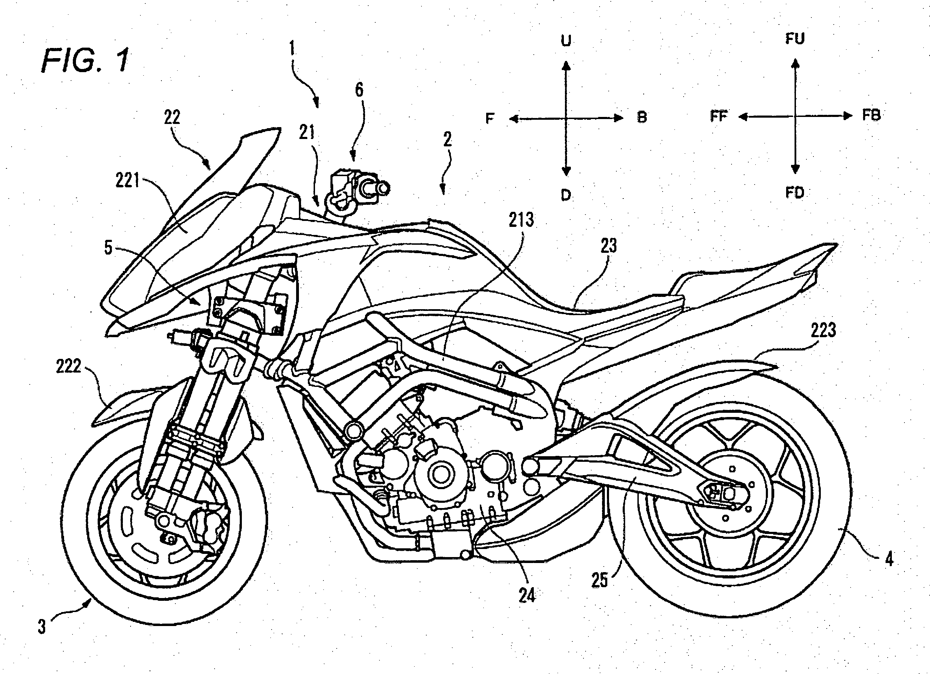

Referring to Figs. 1 to 8, a vehicle 1 according to an embodiment of the invention will be described. As shown in Fig. 1, the vehicle 1 comprises a vehicle main body 2, two front wheels 3, a rear wheel 4, a link mechanism 5 and a steering member 6. The vehicle 1 is a vehicle that comprises a leanable body frame and the two front wheels 3 arranged side by side in a left-right direction of the body frame.

The vehicle main body 2 includes a body frame 21, a body cover 22, a seat 23, an engine unit 24, and a rear arm 25.

In Fig. 1, the body frame 21 is in an upright state. The following description to be made while referring to Fig. 1 is based on the premise that the body frame 21 is in the upright state. Fig. 1 is a left side view of the vehicle 1 resulting when the whole of the vehicle 1 is viewed from the left in the left-right direction of the body frame 21.

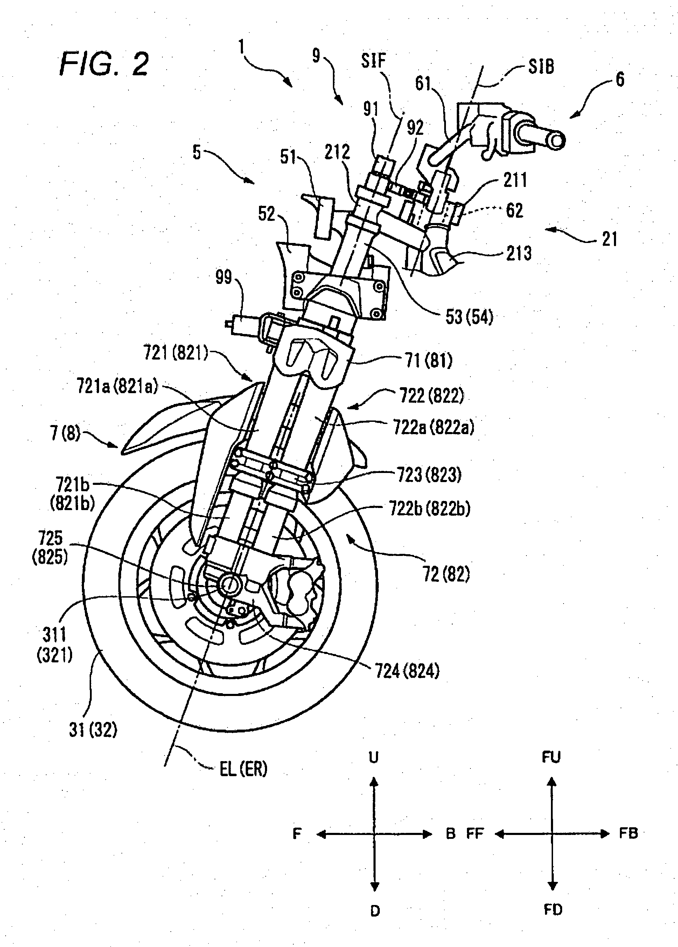

Fig. 2 is a side view of a front portion of the vehicle 1 resulting when the front part is viewed from the left in the left-right direction of the body frame 21. In Fig. 2, the body frame 21 is in the upright state. The following description which refers to Fig. 2 will be made on the premise that the body frame 21 is in the upright state.

The body frame 21 includes a head pipe 211, a link supporting portion 212 and a main frame 213. The head pipe 211 supports the steering member 6. The link supporting portion 212 supports the link mechanism 5. The main frame 213 supports the seat 23, the engine unit 24 and the rear arm 25.

The rear arm 25 is disposed behind the main frame 213 in a front-rear direction of the body frame 21. The rear arm 25 extends in the front-rear direction of the body frame 21. A front end portion of the rear arm 25 is supported by the main frame 213 and the engine unit 24. The front end portion of the rear arm 25 is configured to turn about an axis that extends in the left-right direction of the body frame 21. A rear end portion of the rear arm 25 supports the rear wheel 4.

The body cover 22 is a body component that at least partially covers components that constitute the vehicle 1. The body cover 22 includes a front cover 221, a pair of left and right front fenders 222 and a rear fender 223.

As shown in Fig. 1, the front cover 221 is disposed ahead of the seat 23 in the front-rear direction of the body frame 21. The front cover 221 covers the link mechanism 5, the steering member 6 and at least part of a steering force transmission mechanism 9. The front cover 221 is disposed so as not to move relative to the body frame 21. In Fig. 2, the front cover 221 is omitted from illustration.

At least portions of each of the left and right front fenders 222 is disposed directly below the front cover 221. At least portions of the pair of left and right front fenders 222 are disposed directly above the pair of left and right front wheels 3, respectively.

At least part of the rear wheel 4 is disposed below the seat 23 in an up-down direction of the body frame 21. At least part of the rear wheel 4 is disposed directly below the rear front fender 223 in the up-down direction of the body frame 21.

The vehicle 1 according to this embodiment is a vehicle on which a rider is mounted in a riding posture with his or her leg on either side of the body frame 21. Namely, when the rider sits on the seat 23, part of the body frame 21 which is disposed ahead of the seat 23 in the front-rear direction of the body frame 21 is disposed between the legs of the rider. The rider rides the vehicle 1 in a riding posture with his or her legs holding therebetween the main frame 213 or the front cover 221 that is positioned ahead of the seat 23 in the front-rear direction of the body frame 21.

When viewing the vehicle 1 from the left-right direction of the body frame 21, the engine unit 24 is disposed ahead of a front end of the rear wheel 4 in the front-rear direction of the body frame 21. The engine unit 24 is disposed so as not to be movable relative to the body frame 21 . The engine unit 24 is disposed so as not to be movable relative to the main frame 213. The engine unit 24 produces power for driving the vehicle 1. The driving force so produced is transmitted to the rear wheel 4.

The head pipe 211 is disposed at a front portion of the vehicle 1. When viewing the vehicle 1 from the left in the left-right direction of the body frame 21, an upper portion of the head pipe 211 is disposed behind a lower portion of the head pipe 211 in the front-rear direction of the body frame 21.

The steering member 6 includes a handlebar 61 and an upstream steering shaft 62. The upstream steering shaft 62 extends downwards from a central portion of the handlebar 61 in relation to the left-right direction thereof. The upstream steering shaft 62 is supported on the head pipe 211 so as to turn about a rear intermediate steering axis SIB.

The link supporting portion 212 is disposed directly ahead of the head pipe 211 in the front-rear direction of the body frame 21. When viewing the vehicle 1 from the left in the left-right direction of the body frame 21, an upper portion of the link supporting portion 212 is disposed behind a lower portion of the link supporting portion 212 in the front-rear direction of the body frame 21.

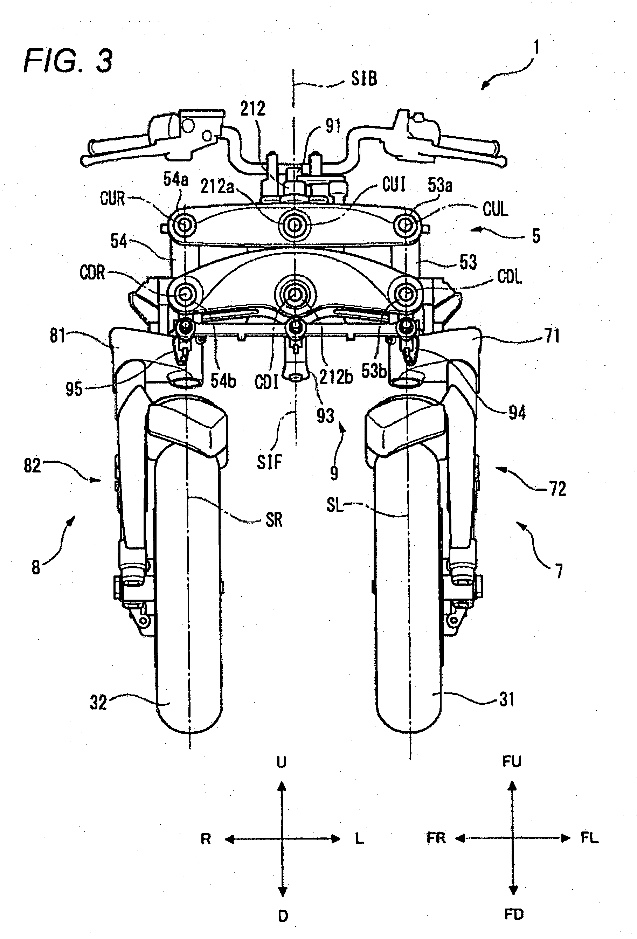

Fig. 3 is a front view of the front portion of the vehicle 1 resulting when viewed from the front in the front-rear direction of the body frame 21. In Fig. 3, the body frame 21 is in the upright state. The following description to be made while referring to Fig. 3 is based on the premise that the body frame 21 is in the upright state. In Fig. 3, the front cover 221 is omitted from illustration.

The two front wheels 3 include a left front wheel 31 and a right front wheel 32. The left front wheel 31 is disposed on the left of the head pipe 211 and the link supporting portion 212 which make up part of the body frame 21 in the left-right direction of the body frame 21. The right front wheel 32 is disposed on the right of the head pipe 211 and the link supporting portion 212 in the left-right direction of the body frame 21. The left front wheel 31 and the right front wheel 32 are arranged side by side in the left-right direction of the body frame 21.

In the vehicle 1 according to this embodiment, the link mechanism 5 adopts a four parallel joint link system (also referred to as a parallelogram link).

The link mechanism 5 is disposed above the left front wheel 31 and the right front wheel 32 in the up-down direction of the body frame 21. The link mechanism 5 includes an upper cross member 51, a lower cross member 52, a left side member 53 and a right side member 54. The link mechanism 5 is not interlocked with the turning of the upstream steering shaft 62 about the rear intermediate steering axis SIB which occurs in association with the operation of the handlebar 61. Namely, the link mechanism 5 never turns about the rear intermediate steering axis SIB relative to the body frame 21.

The link supporting portion 212 has an upper intermediate coupling portion 212a. An intermediate portion of the upper cross member 51 is supported on the link supporting portion 212 via the upper intermediate coupling portion 212a. The upper cross member 51 is able to turn relative to the link supporting portion 212 about an upper intermediate coupling axis CUI that passes the upper intermediate coupling portion 212a and extends in the front-rear direction of the body frame 21.

The link supporting portion 212 has a lower intermediate coupling portion 212b. An intermediate portion of the lower cross member 52 is supported on the link supporting portion 212 via the lower intermediate coupling portion 212b. The lower cross member 52 is able to turn relative to the link supporting portion 212 about a lower intermediate coupling axis CDI that passes the lower intermediate coupling portion 212b and extends in the front-rear direction of the body frame 21.

The left side member 53 has an upper left coupling portion 53a. A left end portion of the upper cross member 51 is coupled with the left side member 53 via the upper left coupling portion 53a. The upper cross member 51 is turnable relative to the left side member 53 about an upper left coupling axis CUL which passes the upper left connecting 53a and extends in the front-rear direction of the body frame 21.

The right side member 54 has an upper right coupling portion 54a. A right end portion of the upper cross member 51 is coupled with the right side member 54 via the upper right coupling portion 54a. The upper cross member 51 is turnable relative to the right side member 54 about an upper right coupling axis CUR which passes the upper right coupling portion 54a and extends in the front-rear direction of the body frame 21.

The left side member 53 has a lower left coupling portion 53b. A left end portion of the lower cross member 52 is coupled with the left side member 53 via the lower left coupling portion 53b. The lower cross member 52 is turnable relative to the left side member 53 about a lower left coupling axis CDL which passes the lower left connecting 53b and extends in the front-rear direction of the body frame 21.

The right side member 54 has a lower right coupling portion 54b. A right end portion of the lower cross member 52 is coupled with the right side member 54 via the lower right coupling portion 54b. The lower cross member 52 is turnable relative to the right side member 54 about a lower right coupling axis CDR which passes the lower right coupling portion 54b and extends in the front-rear direction of the body frame 21.

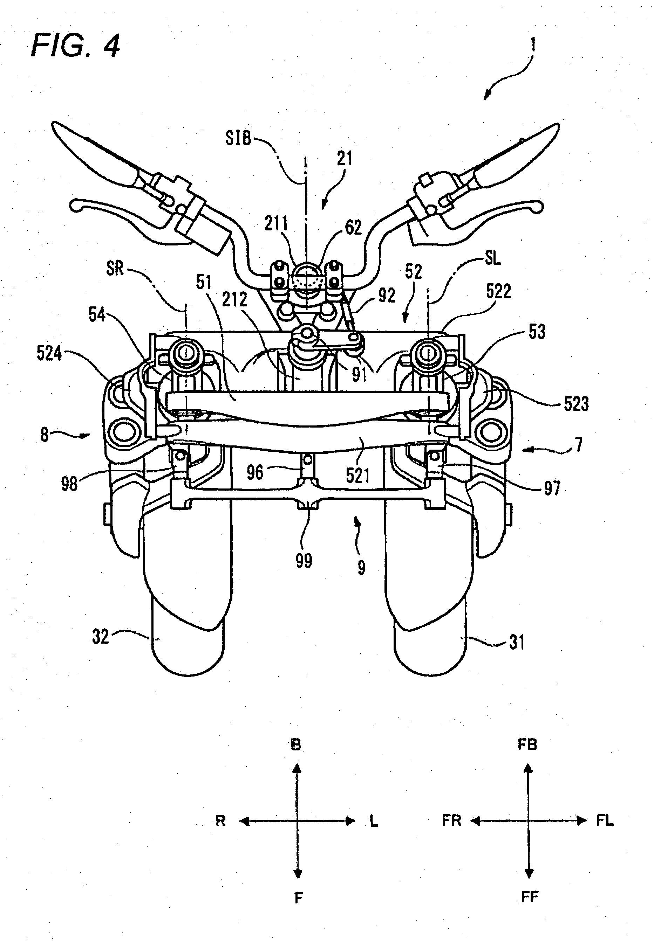

Fig. 4 is a plan view of the front portion of the vehicle 1 when viewed from above in the up-down direction of the body frame 21. In Fig. 4, the body frame 21 is in the upright state. The following description to be made while referring to Fig. 4 is based on the premise that the body frame 21 is in the upright state. In Fig. 4, the front cover 221 is omitted from illustration.

The upper cross member 51 is disposed ahead of the link supporting portion 212 in the front-rear direction of the body frame 21. The upper cross member 51 is a plate member that extends in the left-right direction of the body frame 21 without being curved in the front-rear direction of the body frame 21.

As shown in Figs. 2 and 4, the lower cross member 52 is disposed below the upper cross member 51 in the up-down direction of the body frame 21. The lower cross member 52 includes a front element 521 and a rear element 522. The front element 521 is disposed ahead of the link supporting portion 212, the left side member 53 and the right side member 54 in the front-rear direction of the body frame 21. The rear element 522 is disposed behind the link supporting portion 212, the left side member 53 and the right side member 54 in the front-rear direction of the body frame 21. The front element 521 and the rear element 522 extend in the left-right direction of the body frame 21 without being curved in the front-rear direction of the body frame 21.

As shown in Fig. 4, the lower cross member 52 includes a left coupling member 523 and a right coupling member 524. The left coupling member 523 couples a left end portion of the front element 521 and a left end portion of the rear element 522 together. The right coupling member 524 couples a right end portion of the front element 521 and a right end portion of the rear element 522.

As shown in Figs. 3 and 4, the left side member 53 is disposed directly on the left of the link supporting portion 212 in the left-right direction of the body frame 21. The left side member 53 is disposed above the left front wheel 31 in the up-down direction of the body frame 21. The left side member 53 extends in a direction in which the link supporting portion 212 extends. An upper portion of the left side member 53 is disposed behind a lower portion thereof in the front-rear direction of the body frame 21.

As shown in Figs. 3 and 4, the right side member 54 is disposed directly on the right of the link supporting portion 212 in the left-right direction of the body frame 21. The right side member 54 is disposed above the right front wheel 32 in the up-down direction of the body frame 21. The right side member 54 extends in the direction in which the link supporting portion 212 extends. An upper portion of the right side member 54 is disposed behind a lower portion thereof in the front-rear direction of the body frame 21.

The upper cross member 51, the lower cross member 52, the left side member 53 and the right side member 54 are supported on the link supporting portion 212 so that the upper cross member 51 and the lower cross member 52 are kept parallel to each other in posture and the left side member 53 and the right side member 54 are kept parallel to each other in posture.

As shown in Figs. 2 to 4, the vehicle 1 comprises a left suspension device 7. The left suspension device 7 includes a left bracket 71 (an example of a left coupling member) and a left shock absorbing device 72.

The left bracket 71 comprises a left turnable member, not shown, at an upper portion thereof. The left turnable member is disposed in an interior of the left side member 53 and extends in the same direction as the direction in which the left side member 53 extends. The left turnable member is turnable about a left steering axis SL relative to the left side member 53. Namely, the left bracket 71 is coupled with the left side member 53 so that they are turnable about the left steering axis SL relative to each other. The left steering axis SL extends in the direction in which the left side member 53 extends. As shown in Fig. 3, the left steering axis SL extends parallel to the rear intermediate steering axis SIB of the upstream steering shaft 62 in the up-down direction of the body frame 21. As shown in Fig. 4, the left steering axis SL extends parallel to the rear intermediate steering axis SIB of the upstream steering shaft 62 in the up-down direction of the body frame 21.

The left shock absorbing device 72 is a so-called telescopic shock absorbing mechanism. The left shock absorbing device 72 is configured so as to attenuate a displacement motion of the left front wheel 31 relative to the link mechanism 5 in the up-down direction of the body frame 21. As shown in Fig. 2, the left shock absorbing device 72 includes a left front telescopic element 721, a left rear telescopic element 722, a left upper coupling member 723, a left lower coupling member 724 and a left through hole 725.

The left front telescopic element 721 includes a left front outer tube 721a and a left front inner tube 721b. An outer diameter of the left front outer tube 721 a is greater than an outer diameter of the left front inner tube 721b. The left front outer tube 721a is supported by the left bracket 71. The left front inner tube 721b is coupled with the left front outer tube 721a so as to be slidable along a left telescoping axis EL.

The left rear telescopic element 722 includes a left rear outer tube 722a and a left rear inner tube 722b. An outer diameter of the left rear outer tube 722a is greater than an outer diameter of the left rear inner tube 722b. The left rear outer tube 722a is disposed directly behind the left front outer tube 721a in the front-rear direction of the body frame 21. The left rear outer tube 722a is supported by the left bracket 71. The left rear inner tube 722b is disposed directly behind the left front inner tube 721b in the front-rear direction of the body frame 21. The left rear inner tube 722b is coupled with the left rear outer tube 722a so as to be slidable along the left telescoping axis EL.

The left upper coupling member 723 couples the left front outer tube 721a and the left rear outer tube 722a together.

The left lower coupling member 724 couples the left front inner tube 721b and the left rear inner tube 722b together.

The left through hole 725 is formed in the left lower coupling member 724. The left through hole 725 supports a left wheel axle 311 of the left front wheel 31 rotatably.

The left shock absorbing device 72 is configured so as to attenuate a displacement motion of the left front wheel 31 relative to the link mechanism 5 in the up-down direction of the body frame 21. In particular, the left rear telescopic element 722 is configured so as to serve as a left shock absorber. The left front telescopic element 721, the left upper coupling member 723 and the left lower coupling member 724 restrict the relative turning of the left rear outer tube 722a and the left rear inner tube 722b.

As shown in Figs. 2 to 4, the vehicle 1 comprises a right suspension device 8. The right suspension device 8 includes a right bracket 81 (an example of a right coupling member) and a right shock absorbing device 82. The configuration of the right shock absorbing device 8 is symmetrical with the left suspension device 7 when looking at the vehicle 1 from the left in the left-right direction of the body frame 21. Thus, the right suspension device 8 is not illustrated separately, and only reference numerals for the right suspension device 8 will be shown in Fig. 2.

The right bracket 81 comprises a right turnable member, not shown, at an upper portion thereof. The right turnable member is disposed in an interior of the right side member 54 and extends in the same direction as the direction in which the right side member 54 extends. The right turnable member is turnable about a right steering axis SR relative to the right side member 54. Namely, the right bracket 81 is coupled with the right side member 54 so that they are turnable about the right steering axis SR relative to each other. The right steering axis SR extends in the direction in which the right side member 54 extends As shown in Fig. 3, the right steering axis SR extends parallel to the rear intermediate steering axis SIB of the upstream steering shaft 62 in the up-down direction of the body frame 21. As shown in Fig. 4, the right steering axis SR extends parallel to the rear intermediate steering axis SIB of the upstream steering shaft 62 in the up-down direction of the body frame 21.

The right shock absorbing device 82 is a so-called telescopic shock absorbing mechanism. As shown in Fig. 2, the right shock absorbing device 82 includes a right front telescopic element 821, a right rear telescopic element 822, a right upper coupling member 823, a right lower coupling member 824 and a right through hole 825.

The right front telescopic element 821 includes a right front outer tube 821a and a right front inner tube 821b. An outer diameter of the right front outer tube 821a is greater than an outer diameter of the right front inner tube 821b. The right front outer tube 821a is supported by the right bracket 81. The right front inner tube 821b is coupled with the right front outer tube 821a so as to be slidable along a right telescoping axis ER.

The right rear telescopic element 822 includes a right rear outer tube 822a and a right rear inner tube 822b. An outer diameter of the right rear outer tube 822a is greater than an outer diameter of the right rear inner tube 822b. The right rear outer tube 822a is disposed directly behind the right front outer tube 821a in the front-rear direction of the body frame 21. The right rear outer tube 822a is supported by the right bracket 81. The right rear inner tube 822b is disposed directly behind the right front inner tube 821b in the front-rear direction of the body frame 21. The right rear inner tube 822b is coupled with the right rear outer tube 822a so as to be slidable along the right telescoping axis ER.

The right upper coupling member 823 couples the right front outer tube 821a and the right rear outer tube 822a together.

The right lower coupling member 824 couples the right front inner tube 821b and the right rear inner tube 822b together.

The right through hole 825 is formed in the right lower coupling member 824. The right through hole 825 supports a right wheel axle 321 of the right front wheel 32 rotatably.

The right shock absorbing device 82 is configured so as to attenuate a displacement motion of the right front wheel 32 relative to the link mechanism 5 in the up-down direction of the body frame 21. In particular, the right rear telescopic element 822 is configured so as to serve as a right shock absorber. The right front telescopic element 821, the right upper coupling member 823 and the right lower coupling member 824 restrict the relative turning of the right rear outer tube 822a and the right rear inner tube 822b.

As shown in Figs. 2 to 4, the vehicle 1 comprises a steering force transmission mechanism 9. The steering force transmission mechanism 9 includes a downstream steering shaft 91, a coupling device 92, an intermediate transmission plate 93, a left transmission plate 94, a right transmission plate 95, an intermediate joint 96, a left joint 97, a right joint 98 and a tie rod 99.

The downstream steering shaft 91 is supported on the link supporting portion 212 so as to be turnable about a front intermediate steering axis SIF. The front intermediate steering axis SIF extends parallel to the rear intermediate steering axis SIB about which the upstream steering shaft 62 turns.

The coupling device 92 couples the upstream steering shaft 62 and the downstream steering shaft 91 together. The coupling device 92 is configured so as to be displaced as the upstream steering shaft 62 turns. The downstream steering shaft 91 is configured so as to turn as the coupling device 92 is so displaced. Namely, the coupling device 92 is configured so as to transmit a turning operation of the upstream steering shaft 62 to the downstream steering shaft 91.

The intermediate transmission plate 93 (an example of an intermediate turnable portion) is coupled with a lower portion of the downstream steering shaft 91. The intermediate transmission plate 93 is not turnable relative to the downstream steering shaft 91. The intermediate transmission plate 93 is turnable about the front intermediate steering axis SIF relative to the link supporting portion 212.

The left transmission plate 94 (an example of a left turnable portion) is disposed directly on the left of the intermediate transmission plate 93 in the left-right direction of the body frame 21. The left transmission plate 94 is coupled with a lower portion of the left bracket 71. The left transmission plate 94 is not turnable relative to the left bracket 71. The left transmission plate 94 is turnable about the left steering axis SL relative to the left side member 53.

The right transmission plate 95 (an example of a right turnable portion) is disposed directly on the right of the intermediate transmission plate 93 in the left-right direction of the body frame 21. The right transmission plate 95 is coupled with a lower portion of the right bracket 81. The right transmission plate 95 is not turnable relative to the right bracket 81. The right transmission plate 95 is turnable about the right steering axis SR relative to the right side member 54.

As shown in Fig. 4, the intermediate joint 96 is coupled with a front portion of the intermediate transmission plate 93 via a shaft portion that extends in the up-down direction of the body frame 21. The intermediate transmission plate 93 and the intermediate joint 96 are configured to turn relative to each other about this shaft portion.

The left joint 97 is disposed on the left of the intermediate joint 96 in the left-right direction of the body frame 21. The left joint 97 is coupled with a front portion of the left transmission plate 94 via a shaft portion that extends in the up-down direction of the body frame 21. The left transmission plate 94 and the left joint 97 are configured to turn relative to each other about this shaft portion.

The right joint 98 is disposed on the right of the intermediate joint 96 in the left-right direction of the body frame 21. The right joint 98 is coupled with a front portion of the right transmission plate 95 via a shaft portion that extends in the up-down direction of the body frame. The right transmission plate 95 and the right joint 98 are configured to turn relative to each other about this shaft portion.

A shaft portion that extends in the front-rear direction of the body frame 21 is provided at a front portion of the intermediate joint 96. A shaft portion that extends in the front-rear direction of the body frame 21 is provided at a front portion of the left joint 97. A shaft portion that extends in the front-rear direction of the body frame 21 is provided at a front portion of the right joint 98.

The tie rod 99 (an example of a coupling portion) extends in the left-right direction of the body frame 21. The tie rod 99 is coupled with the intermediate joint 96, the left joint 97 and the right joint 98 via those shaft portions. The tie rod 99 and the intermediate joint 96 is turnable relative to each other about the shaft portion that is provided at the front portion of the intermediate joint 96. The tie rod 99 and the left joint 97 is turnable relative to each other about the shaft portion that is provided at the front portion of the left joint 97. The tie rod 99 and the right joint 98 is turnable relative to each other about the shaft portion that is provided at the front portion of the right joint 98.

The left transmission plate 94 is coupled with the intermediate transmission plate 93 via the left joint 97, the tie rod 99, and the intermediate joint 96. The right transmission plate 95 is coupled with the intermediate transmission plate 93 via the right joint 98, the tie rod 99 and the intermediate joint 96. The left transmission plate 94 and the right transmission plate 95 are coupled with each other via the left joint 97, the tie rod 99 and the right joint 98. In other words, the tie rod 99 couples the intermediate transmission plate 93 to the left transmission plate 94 and the right transmission plate 95.

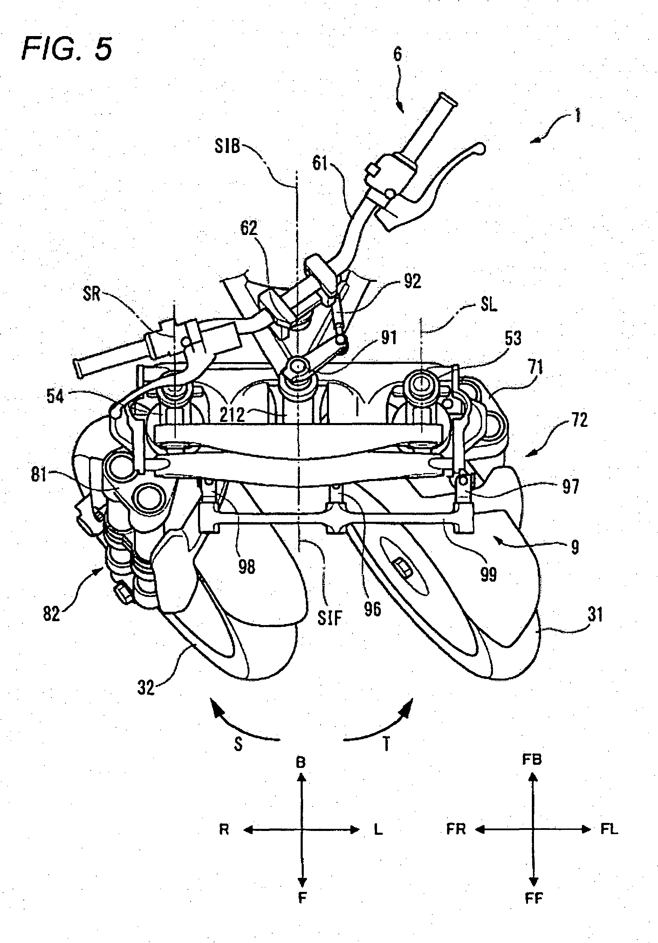

Next, referring to Figs. 4 and 5, a steering operation of the vehicle 1 will be described. Fig. 5 is a plan view of the front part of the vehicle 1, with the left front wheel 31 and the right front wheel 32 thereof turned to the left, resulting when the front portion is viewed from above in the up-down direction of the body frame 21. In Fig. 5, the front cover 221 is omitted from illustration.

When the rider operates the handlebar 61, the upstream steering shaft 62 turns about the rear intermediate steering axis SIB relative to the head pipe 211. The turning operation of the upstream steering shaft 62 is transmitted to the downstream steering shaft 91 via the coupling device 92. Accordingly, the downstream steering shaft 91 turns relative to the link supporting portion 212 about the front intermediate steering axis SIF. In the case of the front left and right front wheels being turned to the left as shown in Fig. 5, the downstream steering shaft 91 turns in a direction indicated by an arrow T. As the downstream steering shaft 91 so turns, the intermediate transmission plate 93 turns in the direction indicated by the arrow T about the front intermediate steering axis SIF relative to the link supporting portion 212.

As the intermediate transmission plate 93 turns in the direction indicated by the arrow T, the intermediate joint 96 turns relative to the intermediate transmission plate 93 in a direction indicated by an arrow S. This causes the tie rod 99 to move to the left in the left-right direction of the body frame 21 and to the rear in the front-rear direction of the body frame 21 while maintaining its posture.

As the tie rod 99 so moves, the left joint 97 and the right joint 98 turn in the direction indicated by the arrow S relative to the left transmission plate 94 and the right transmission plate 95, respectively. This causes the left transmission plate 94 and the right transmission plate 95 to turn in the direction indicated by the arrow T while allowing the tie rod 99 to keep its posture.

When the left transmission plate 94 is turned in the direction indicated by the arrow T, the left bracket 71, which is not turnable relative to the left transmission plate 94, is turned in the direction indicated by the arrow T about the left steering axis SL relative to the left side member 53.

When the right transmission plate 95 is turned in the direction indicated by the arrow T, the right bracket 81, which is not turnable relative to the right transmission plate 95, is turned in the direction indicated by the arrow T about the right steering axis SR relative to the right side member 54.

When the left bracket 71 is turned in the direction indicated by the arrow T, the left shock absorbing device 72, which is supported on the left bracket 71, is turned in the direction indicated by the arrow T about the left steering axis SL relative to the left side member 53. When the left shock absorbing device 72 is turned in the direction indicated by the arrow T, the left front wheel 31, which is supported on the left shock absorbing device 72, is turned in the direction indicated by the arrow T about the left steering axis SL relative to the left side member 53.

When the right bracket 81 is turned in the direction indicated by the arrow T, the right shock absorbing device 82, which is supported on the right bracket 81, is turned in the direction indicated by the arrow T about the right steering axis SR relative to the right side member 54. When the right shock absorbing device 82 is turned in the direction indicated by the arrow T, the right front wheel 32, which is supported on the right shock absorbing device 82, is turned in the direction indicated by the arrow T about the right steering axis SR relative to the right side member 54.

When the rider operates the handlebar 61 so as to steer the vehicle 1 to the right, the elements described above turn in opposite directions to the directions in which they turn when the vehicle turns to the left. Since the elements merely move reversely in relation to the left-right direction, a detailed description of the reverse movement of the elements will be omitted here.

Thus, as has been described heretofore, the steering member 6 transmits the steering force to the left front wheel 31 and the right front wheel 32 in response to the operation of the handlebar 61 by the rider. The left front wheel 31 and the right front wheel 32 turn about the left steering axis SL and the right steering axis SR, respectively, in the direction corresponding to the direction in which the handlebar 61 is operated by the rider.

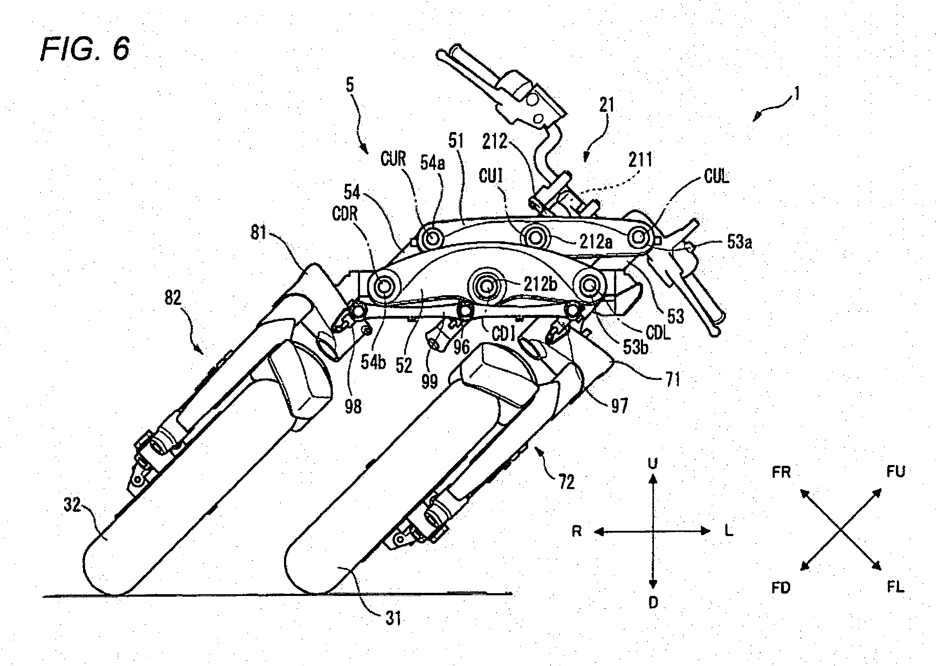

Next, referring to Figs. 3 and 6, a leaning operation of the vehicle 1 will be described. Fig. 6 is a front view of the front part of the vehicle 1 resulting when the vehicle 1 is viewed from the front in the front-rear direction of the body frame 21, showing a state where the body frame 21 is caused to lean to the left of the vehicle 1. In Fig. 6, the front cover 221 is omitted from illustration.

As shown in Fig. 3, when looking at the vehicle 1 from the front of the body frame 21 which is standing upright, the link mechanism 5 exhibits the shape of a rectangle. As shown in Fig. 6, when looking at the vehicle 1 from the front of the body frame 21 which is leaning, the link mechanism 5 exhibits the shape of a parallelogram. The link mechanism 5 operates in association with the leaning of the body frame 21 in the left-right direction. The expression "operation of the link mechanism 5" means that the shape of the link mechanism 5 changes as a result of the upper cross member 51 and the lower cross member 52 turning relative to the link supporting portion 212 about the upper intermediate coupling axis CUI and the lower intermediate coupling axis CDI, respectively, while the upper cross member 51, the lower cross member 52, the left side member 53 and the right side member 54 turning relatively about the upper left coupling axis CUL, the upper right coupling axis CUR, the lower left coupling axis CDL and the lower right coupling axis CDR, respectively.

For example, as shown in Fig. 6, when the rider causes the vehicle 1 to lean to the left, the head pipe 211 and the link supporting portion 212 lean to the left from the vertical direction. As the head pipe 211 and the link supporting portion 212 so lean, the upper cross member 51 turns counterclockwise about the upper intermediate coupling axis CUI that passes the upper intermediate coupling portion 212a relative to the link supporting portion 212 when viewed from the front of the vehicle 1. Similarly, the lower cross member 52 turns counterclockwise about the lower intermediate coupling axis CDI that passes the lower intermediate coupling portion 212b relative to the head pipe 211 when viewed from the front of the vehicle 1. This causes the upper cross member 51 to move to the left in the left-right direction of the body frame 21 relative to the lower cross member 52.

As a result of the upper cross member 51 moving in the way described above, the upper cross member 51 turns counterclockwise about the upper left coupling axis CUL that passes the upper left coupling portion 53a and the upper right coupling axis CUR that passes the upper right coupling portion 54a relative to the left side member 53 and the right side member 54, respectively, when viewed from the front of the vehicle 1. Similarly, the lower cross member 52 turns counterclockwise about the lower left coupling axis CDL that passes the lower left coupling portion 53b and the lower right coupling axis CDR that passes the lower right coupling portion 54b relative to the left side member 53 and the right side member 54, respectively, when viewed from the front of the vehicle 1. As a result of the lower cross member 52 moving in the way described above, the left side member 53 and the right side member 54 lean to the left of the vehicle 1 from the vertical direction while maintaining their postures that are parallel to the head pipe 211 and the link supporting portion 212.

As this occurs, the lower cross member 52 moves to the left in the left-right direction of the body frame 21 relative to the tie rod 99. As a result of the lower cross member 52 moving in the way described above, the shaft portions that are provided at the respective front portions of the intermediate joint 96, the left joint 97 and the right joint 98 turn relative to the tie rod 99. This allows the tie rod 99 to hold a posture that is parallel to the upper cross member 51 and the lower cross member 52.

As the left side member 53 leans to the left of the vehicle 1, the left bracket 71 that is supported on the left side member 53 via the left turnable member leans to the left of the vehicle 1. As the left bracket 71 leans in this way, the left shock absorbing device 72 that is supported on the left bracket 71 also leans to the left of the vehicle 1. As a result of the left shock absorbing device 72 leaning in the way described above, the left front wheel 31 that is supported on the left shock absorbing device 72 leans to the left of the vehicle 1 while maintaining its posture that is parallel to the head pipe 211 and the link supporting portion 212.

As the right side member 54 leans to the left of the vehicle 1, the right bracket 81, that is supported on the right side member 54 via the right turnable member, leans to the left of the vehicle 1. As the right bracket 81 leans in this way, the right shock absorbing device 82 that is supported on the right bracket 81 also leans to the left of the vehicle 1. As a result of the right shock absorbing device 82 leaning in the way described above, the right front wheel 32 that is supported on the right shock absorbing device 82 leans to the left of the vehicle 1 while maintaining its posture that is parallel to the head pipe 211 and the link supporting portion 212.

The descriptions of the leaning operations of the left front wheel 31 and the right front wheel 32 are made in relation to the vertical direction as a reference. However, when the vehicle 1 is operated to lean (when the link mechanism 5 is activated to operate), the up-down direction of the body frame 21 does not coincide with the vertical direction. In the event that the up-down direction of the body frame 21 is taken as the reference, when the link mechanism 5 is activated to operate, the left front wheel 31 and the right front wheel 32 change their relative position in the up-down direction of the body frame 21. In other words, the link mechanism 5 changes the relative position of the left front wheel 31 and the right front wheel 32 in the up-down direction of the body frame 21 to thereby cause the body frame 21 to lean to the left or right of the vehicle 1 from the vertical direction.

When the rider causes the vehicle 1 to lean to the right, the elements lean to the right. Since the elements merely move reversely in relation to the left-right direction, a detailed description of the reverse movement of the elements will be omitted here.

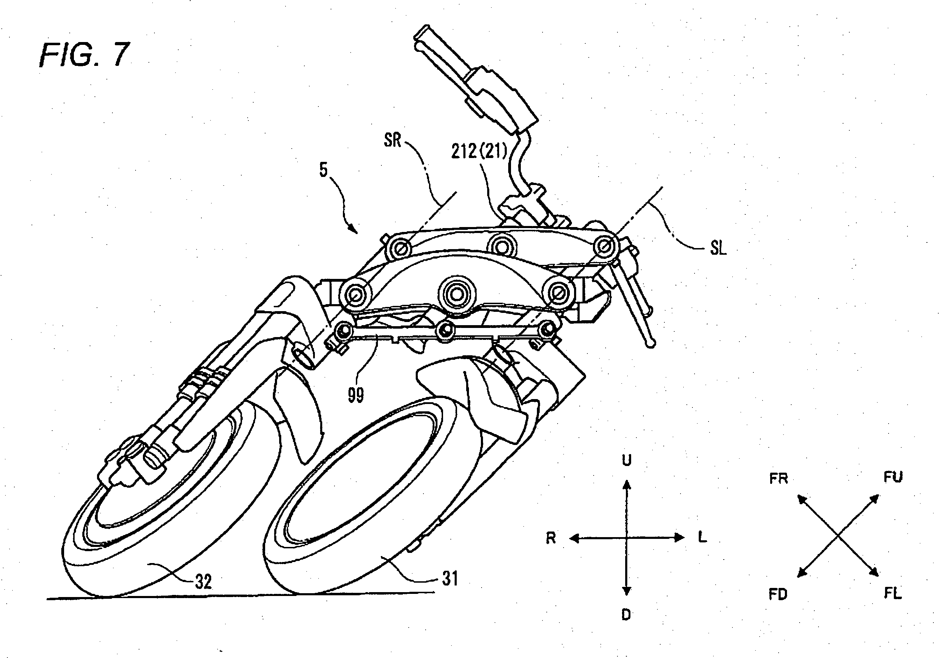

Fig. 7 is a front view of the front part of the vehicle 1 resulting when the vehicle 1 is viewed from the front in the front-rear direction of the body frame 21, which shows a state in which the vehicle 1 is caused to lean while the front wheels thereof are being turned. Specifically, Fig. 7 shows the state in which the vehicle 1 is caused to lean to the left while the front wheels thereof are being turned to the left. In Fig. 7, the front cover 221 is omitted from illustration.

When the rider steers the vehicle 1, the left front wheel 31 is turned counterclockwise about the left steering axis SL, while the right front wheel 32 is turned counterclockwise about the right steering axis SR. When the rider causes the vehicle 1 to lean, the left front wheel 31 and the right front wheel 32 lean to the left of the vehicle 1 together with the body frame 21. Namely, in this state, the link mechanism 5 exhibits the shape of a parallelogram. The tie rod 99 moves to the left in the left-right direction of the body frame 21 and to the rear in the front-rear direction of the body frame 21 from the position that the tie rod 99 takes when the body frame 21 is standing upright.

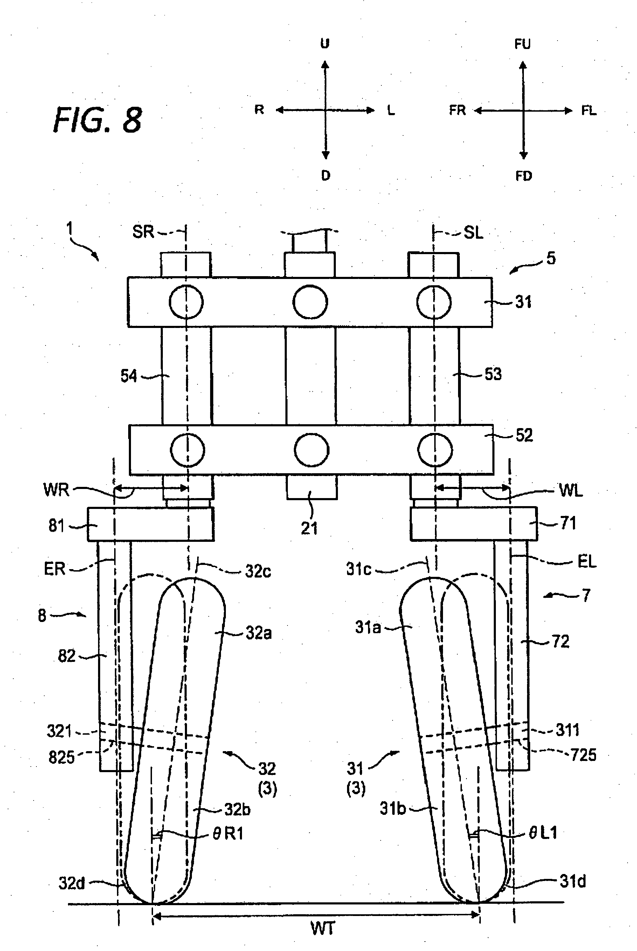

Fig. 8 is a front view showing schematically the configuration of part of the vehicle 1 according to this embodiment. In Fig. 8, the body frame 21 is in the upright state. The following description to be made while referring to Fig. 8 is based on the premise that the body frame 21 is in the upright state. As a matter of convenience of description, scales of the constituent elements and angular relationships thereof are changed as required.

The left front wheel 31 is inclined relative to the left telescoping axis EL in such a way that an upper portion 31a lies further away from the left telescoping axis EL than a lower portion 31b. In this embodiment, the direction in which the left telescoping axis EL extends when the vehicle 1 is viewed from the front coincides with the vertical direction.

The upper portion 31a of the left front wheel 31 is a portion which lies above the left wheel axle 311. The expression "a portion which lies above the left wheel axle" means a portion which lies above the left wheel axle 311 within a left plane 31c which perpendicularly intersects the left wheel axle 311 at a widthwise center of the left front wheel 31. The lower portion 31b of the left front wheel 31 is a portion which lies below the left wheel axle 311. The expression "a portion which lies below the left wheel axle 311" means a portion which lies below the left wheel axle 311 within the left plane 31 c.

The right front wheel 32 is inclined relative to the right telescoping axis ER in such a way that an upper portion 32a lies further away from the right telescoping axis ER than a lower portion 32b. In this embodiment, the direction in which the right telescoping axis ER extends when the vehicle 1 is viewed from the front coincides with the vertical direction.

The upper portion 32a of the right front wheel 32 is a portion which lies above the right wheel axle 321. The expression "a portion which lies above the right wheel axle 321" means a portion which lies above the right wheel axle 321 within a right plane 32c which perpendicularly intersects the right wheel axle 321 at a widthwise center of the right front wheel 32. The lower portion 32b of the right front wheel 32 is a portion which lies below the right wheel axle 321. The expression "a portion which lies below the right wheel axle 321" means a portion which lies below the right wheel axle 321 within the right plane 32c.

Since the upper portion 31a of the left front wheel 31 lies further away from the left telescoping axis EL that passes through the left shock absorbing device 72 than the lower portion 31b of the left front wheel 31, an extra space can be secured between the upper portion 31a of the left front wheel 31 and the left shock absorbing device 72. Thus, the space defined between the upper portion 31a of the left front wheel 31 and the left shock absorbing device 72 can be utilized as a space where to dispose peripheral parts of the left front wheel 31 and the left shock absorbing device 72 which are conventionally provided in separate portions. On the other hand, part of the lower portion 31b of the left front wheel 31 can be disposed directly below the left shock absorbing device 72 in the up-down direction of the body frame 21. Thus, an extra space which is originally defined directly below the left shock absorbing device 72 can be utilized effectively. As a result, it is possible to enhance the utilization efficiency of the space including the left front wheel 31 and the left suspension device 7.

Since the upper portion 32a of the right front wheel 32 lies further away from the right telescoping axis ER that passes through the right shock absorbing device 82 than the lower portion 32b of the right front wheel 32, an extra space can be secured between the upper portion 32a of the right front wheel 32 and the right shock absorbing device 82. Thus, the space defined between the upper portion 32a of the right front wheel 32 and the right shock absorbing device 82 can be utilized as a space where to dispose peripheral parts of the right front wheel 32 and the right shock absorbing device 82 which are conventionally provided in separate portions. On the other hand, part of the lower portion 32b of the right front wheel 32 can be disposed directly below the right shock absorbing device 82 in the up-down direction of the body frame 21. Thus, an extra space which is originally defined directly below the right shock absorbing device 82 can be utilized effectively. As a result, it is possible to enhance the utilization efficiency of the space including the right front wheel 32 and the right suspension device 8.

Consequently, it is possible to suppress the enlargement in size of the vehicle 1 which comprises the leanable body frame 21, the two front wheels 3, the link mechanism 5, the left suspension device 7 and the right suspension device 8.

As shown in Fig. 8, the left front wheel 31 is inclined from the vertical direction which is expressed as an orientation defined by arrows U and D in such a way that the upper portion 31a lies further away from the left telescoping axis EL than the lower portion 31b. An inclination angle θL1 of the left front wheel 31 from the vertical direction, which is expressed as an inclination angle of the left plane 31c from the vertical direction is greater than an inclination angle of the left telescoping axis EL from the vertical direction. The left telescoping axis EL may be inclined in the left-right direction of the body frame 21 from the vertical direction. However, the configuration in which the upper portion 31a of the left front wheel 31 lies further away from the left telescoping axis EL than the lower portion 31b thereof is required to be realized by the configuration in which the inclination angle of the left front wheel 31 (the left plane 31c) is greater than the inclination angle of the left telescoping axis EL(the left shock absorbing device 72).

On the other hand, the right front wheel 32 is inclined from the vertical direction which is expressed as the orientation defined by the arrows U and D in such a way that the upper portion 32a lies further away from the right telescoping axis ER than the lower portion 32b. An inclination angle θR1 of the right front wheel 32 from the vertical direction, which is expressed as an inclination angle of the right plane 32c from the vertical direction is greater than an inclination angle of the right telescoping axis ER from the vertical direction. The right telescoping axis ER may be inclined in the left-right direction of the body frame 21 from the vertical direction. However, the configuration in which the upper portion 32a of the right front wheel 32 lies further away from the right telescoping axis ER than the lower portion 32b thereof is required to be realized by the configuration in which the inclination angle of the right front wheel 32 (the right plane 32c) is greater than the inclination angle of the right telescoping axis ER (the right shock absorbing device 82).

According to the configuration described above, it is possible to make short a distance WL which Is defined in the left-right direction of the body frame 21 between the left telescoping axis EL and the left steering axis SL which passes through the left front wheel 31 and serves as a turning center of the left bracket 71. Consequently, it is possible to suppress the enlargement in size of the left bracket 71. Similarly, it is possible to make short a distance WR which is defined in the left-right direction of the body frame 21 between the right telescoping axis ER and the right steering axis SR which passes through the right front wheel 32 and serves as a turning center of the right bracket 81. Consequently, it is possible to suppress the enlargement in size of the right bracket 81.

Therefore, it is possible to suppress the enlargement in size of the vehicle 1 which comprises the leanable body frame 21, the two front wheels 3, the link mechanism 5, the left suspension device 7 and the right suspension device 8.

As shown in Fig. 8, the left shock absorbing device 72 is disposed on the left of the left front wheel 31 in the left-right direction of the body frame 21. Consequently, the left front wheel 31 is inclined from the vertical direction in such a way that the upper portion 31a lies on the right of the lower portion 31b.

On the other hand, the right shock absorbing device 82 is disposed on the right of the right front wheel 32 in the left-right direction of the body frame 21. Consequently, the right front wheel 32 is inclined from the vertical direction in such a way that the upper portion 32a lies on the left of the lower portion 32b.

According to the configuration described above, a distance between the upper portion 31a of the left front wheel 31 and the upper portion 32a of the right front wheel 32 in the left-right direction of the body frame 21 is made shorter than a distance between the lower portion 31b of the left front wheel 31 and the lower portion 32b of the right front wheel 32 in the same direction. When compared with a configuration (indicated by dashed chain lines in Fig. 8) in which the left plane 31c extends parallel to the left telescoping axis EL and the right plane 32c extends parallel to the right telescoping axis ER, since the distance WL between the left steering axis SL and the left telescoping axis EL as well as the distance WR between the right steering axis SR and the right telescoping axis ER can be made short. In a case where a tread width WT between the left front wheel 31 and the right front wheel 32 remains the same in both the configurations, the distance between the left shock absorbing device 72 and the right shock absorbing device 82 in the left-right direction of the body frame 21 can be made shorter in the configuration of this embodiment. Consequently, it is possible to suppress the enlargement in size of the vehicle 1 which comprises the leanable body frame 21, the two front wheels 3, the link mechanism 5, the left suspension device 7 and the right suspension device 8.

As shown in Fig. 8, the left through hole 725 of the left shock absorbing device 72 supports the left wheel axle 311 of the left front wheel 31 rotatably. The left through hole 725 extends so as to intersect non-perpendicularly the left telescoping axis EL when viewed in the front-rear direction of the body frame 21.

On the other hand, the right through hole 825 of the right shock absorbing device 82 supports the right wheel axle 321 of the right front wheel 32 rotatably. The right through hole 825 extends so as to intersect non-perpendicularly the right telescoping axis ER when viewed in the front-rear direction of the body frame 21.

According to the configuration described above, the left front wheel 31 and the right front wheel 32 can be inclined from the vertical direction in the way described above with the simple configuration.

As described above by reference to Fig. 2, the left shock absorbing device 72 comprises the left rear outer tube 722a (an example of a left upper portion) and the left rear inner tube 722b (an example of a left lower portion). The left suspension device 7 comprises the left front outer tube 721a (an example of a left guide portion) and the left front inner tube 721b (an example of a left guided portion). The left front outer tube 721a and the left front inner tube 721b are configured to change their relative positions in a direction parallel to the left telescoping axis EL. The left front outer tube 721a is coupled with the left rear outer tube 722a via the left upper coupling member 723. The left front inner tube 721b is coupled with the left rear inner tube 722b via the left lower coupling member 724. Accordingly, the left front outer tube 721a and the left front inner tube 721b restrict the relative turning of the left rear outer tube 722a and the left rear inner tube 722b.

On the other hand, the right shock absorbing device 82 comprises the right rear outer tube 822a (an example of a right upper portion) and the right rear inner tube 822b (an example of a right lower portion). The right suspension device 8 comprises the right front outer tube 821a (an example of a right guide portion) and the right front inner tube 821b (an example of a right guided portion). The right front outer tube 821a and the right front inner tube 821b are configured to change their relative positions in a direction parallel to the right telescoping axis ER. The right front outer tube 821a is coupled with the right rear outer tube 822a via the right upper coupling member 823. The right front inner tube 821b is coupled with the right rear inner tube 822b via the right lower coupling member 824. Accordingly, the right front outer tube 821a and the right front inner tube 821b restrict the relative turning of the right rear outer tube 822a and the right rear inner tube 822b.

According to the configuration described above, when compared with a so-called leading arm configuration, it is possible to suppress the enlargement in size of the vehicle 1. In the leading arm configuration, each shock absorbing device is coupled with, via a rotary link, a member which is not so designed as to telescope. Hence, it is difficult to ensure a long telescoping stroke for the shock absorbing device. Thus, there is a tendency that the shock absorbing device is enlarged in size in order to obtain a desired shock absorbing performance. In other words, there is a tendency that diameters of upper and lower portions which are configured to change their relative positions are enlarged. According to the configuration described above, since it is possible to suppress the enlargement in size of the structures of the left shock absorbing device 72 and the right shock absorbing device 82 for ensuring the predetermined telescoping stroke, even though the left front wheel 31 is disposed in proximity to the left shock absorbing device 72 as well as the right front wheel 32 is disposed in proximity to the right shock absorbing device 82, it is easy to avoid the interference of the relevant members.

As shown in Fig. 8, a ground contact surface 31d of the left front wheel 31 is curved relative to a direction which is parallel to the left wheel axle 311 of the left front wheel 31.

On the other hand, a ground contact surface 32d of the right front wheel 32 is curved relative to a direction which is parallel to the right wheel axle 321 of the right front wheel 32.

According to the configuration described above, it is easy to incline the left front wheel 31 and the right front wheel 32 from the vertical direction in the way described above.

The embodiment described heretofore is intended to facilitate the understanding of the disclosed concept and is not intended to limit the disclosed concept. It is obvious that the disclosed contents can be modified or improved without departing from the disclosed concept.

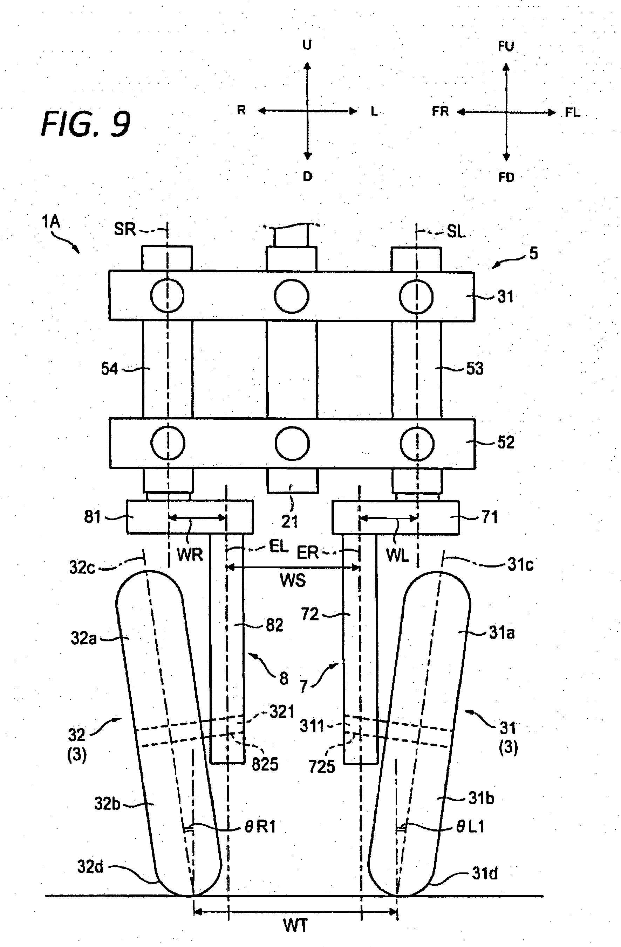

In the above embodiment, the left shock absorbing device 72 is disposed on the left of the left front wheel 31 in the left-right direction of the body frame 21. On the other hand, the right shock absorbing device 82 is disposed on the right of the right front wheel 32 in the left-right direction of the body frame 21. However, according to a first modified example, it is possible to adopt a vehicle 1A configured as shown in Fig. 9.

In this modified example, the left shock absorbing device 72 is disposed on the right of the left front wheel 31 in the left-right direction of the body frame 21. Consequently, the left front wheel 31 is inclined from the vertical direction in such a way that the upper portion 31a lies on the left of the lower portion 31b.

On the other hand, the right shock absorbing device 82 is disposed on the left of the right front wheel 32 in the left-right direction of the body frame 21. Consequently, the right front wheel 32 is inclined from the vertical direction in such a way that the upper portion 32a lies on the right of the lower portion 32b.

According to the configuration described above, a distance between the upper portion 31a of the left front wheel 31 and the upper portion 32a of the right front wheel 32 in the left-right direction of the body frame 21 is made longer than a distance between the lower portion 31b of the left front wheel 31 and the lower portion 32b of the right front wheel 32 in the same direction. When compared with a configuration in which the left plane 31c extends parallel to the left telescoping axis EL as well as the right plane 32c extends parallel to the right telescoping axis ER, in a case where a tread width WT between the left front wheel 31 and the right front wheel 32 remains the same in both the configurations, a distance WS between the left telescoping axis EL and the right telescoping axis ER can be made long. In other words, if it is possible to ensure an original distance WS which is necessary to avoid the interference of the left shock absorbing device 72 with the right shock absorbing device 82, since a distance WL between the left steering axis SL and the left telescoping axis EL as well as a distance WR between the right steering axis SR and the right telescoping axis ER can be made short, a distance between the left side member 53 and the right side member 54 in the left-right direction of the body frame can be made short. Consequently, it is possible to suppress the enlargement in size of the vehicle 1A which comprises the leanable body frame 21, the two front wheels 3, the link mechanism 5, the left suspension device 7 and the right suspension device 8.

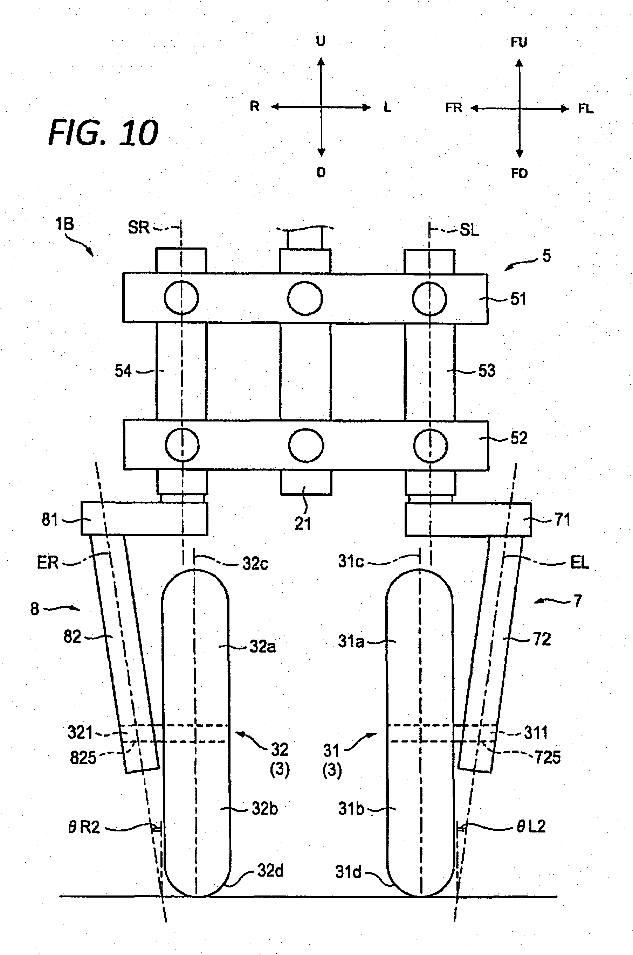

In the embodiment described above, the left front wheel 31 and the right front wheel 32 are inclined from the vertical direction. Here, the left telescoping axis EL and the right telescoping axis ER extend in the vertical direction. However, according to a second modified example, it is possible to adopt a vehicle 1B configured as shown in Fig. 10.

In this modified example, the left telescoping axis EL is inclined from the vertical direction which is expressed by an orientation indicated by arrows U and D. The left plane 31c of the left front wheel 31 extends in the vertical direction. An inclination angle θL2 of the left telescoping axis EL from the vertical direction is greater than an inclination angle of the left front wheel 31 from the vertical direction which is expressed by an inclination angle of the left plane 31c from the vertical direction. The left plane 31c may be inclined in the left-right direction of the body frame 21 from the vertical direction. However, the configuration in which the upper portion 31a of the left front wheel 31 lies further away from the left telescoping axis EL than the lower portion 31b thereof is required to be realized by the configuration in which the inclination angle of the left telescoping axis EL (the left shock absorbing device 72) is greater than the inclination angle of the left plane 31c (the left front wheel 31).

On the other hand, the right telescoping axis ER is inclined from the vertical direction which is expressed by the arrows U and D. The right plane 32c of the right front wheel 32 extends in the vertical direction. An inclination angle θR2 of the right telescoping axis ER from the vertical direction is greater than an inclination angle of the right front wheel 32 from the vertical direction which is expressed as an inclination angle of the right plane 32c from the vertical direction. The right plane 32c may be inclined in the left-right direction of the body frame 21 from the vertical direction. However, the configuration in which the upper portion 32a of the right front wheel 32 lies further away from the right telescoping axis ER than the lower portion 32b thereof is required to be realized by the configuration in which the inclination angle of the right plane 32c (the right front wheel 32) is greater than the inclination angle of the right telescoping axis ER (the right shock absorbing device 82).

There is need to increase a resistance force against the telescopic actions of the left shock absorbing device 72 and the right shock absorbing device 82 when the left shock absorbing device 72 and the right shock absorbing device 82 perform telescopic actions at the same phase. According to the configuration described above, a tread width WT between the left front wheel 31 and the right front wheel 32 in the left-right direction of the body frame 21 changes in accordance with the telescopic actions of the left shock absorbing device 72 and the right shock absorbing device 82a at the same phase. Here, frictional resistance produced between the ground contact surfaces of the two front wheels 3 and the road surface may be added to the left shock absorbing device 72 and the right shock absorbing device 82 as resistance against the telescopic actions of the left shock absorbing device 72 and the right shock absorbing device 82. It is thus possible to meet the need described above while suppressing the enlargement in size of the vehicle 1 comprising the leanable body frame 21, the two front wheels 3, the link mechanism 5, the left suspension device 7 and the right suspension device 8.

As shown in Fig. 10, the left shock absorbing device 72 is disposed on the left of the left front wheel 31 in the left-right direction of the body frame 21. Consequently, the left shock absorbing device 72 is inclined from the vertical direction in such a way that an upper portion lies on the left of a lower portion thereof.

On the other hand, the right shock absorbing device 82 is disposed on the right of the right front wheel 32 in the left-right direction of the body frame 21. Consequently, the right shock absorbing device 82 is inclined from the vertical direction in such a way that an upper portion lies on the right of a lower portion thereof.

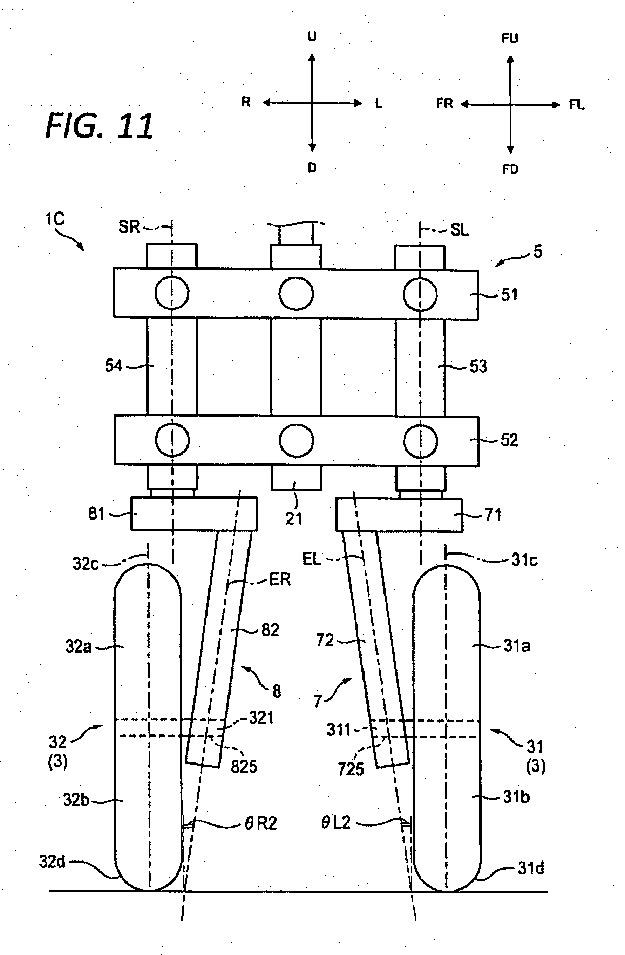

However, according to a third modified example, it is possible to adopt a vehicle 1C configured as shown in Fig. 11.

In this modified example, the left shock absorbing device 72 is disposed on the right of the left front wheel 31 in the left-right direction of the body frame 21. Consequently, the left shock absorbing device 72 is inclined from the vertical direction in such a way that an upper portion lies on the right of a lower portion thereof.

On the other hand, the right shock absorbing device 82 is disposed on the left of the right front wheel 32 in the left-right direction of the body frame 21. Consequently, the right shock absorbing device 82 is inclined from the vertical direction in such a way that an upper portion lies on the left of a lower portion thereof.

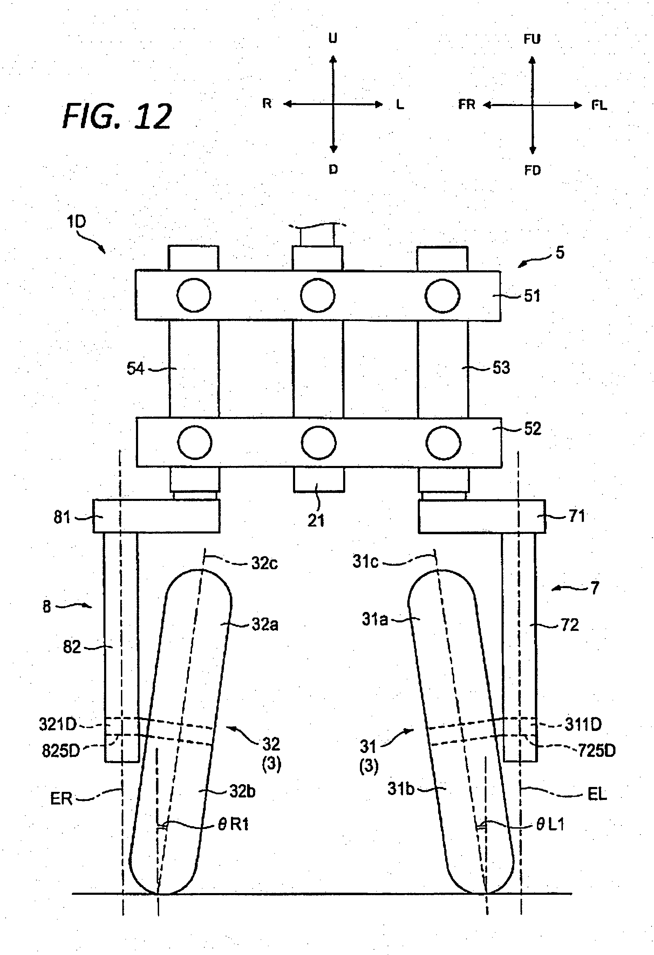

As shown in Fig. 8, the left through hole 725 of the left shock absorbing device 72 supports the left wheel axle 311 of the left front wheel 31 rotatably. The left through hole 725 extends so as to intersect non-perpendicularly the left telescoping axis EL. On the other hand, the right through hole 825 of the right shock absorbing device 82 supports the right wheel axle 321 of the right front wheel 32 rotatably. The right through hole 825 extends so as to intersect non-perpendicularly the right telescoping axis ER. However, according to a fourth modified example, it is possible to adopt a vehicle 1D configured as shown in Fig. 12.

In this modified example, a left through hole 725D extends so as to intersect the left telescoping axis EL perpendicularly. In this case, the inclination angle of the left front wheel 31 described above can be realized by the left wheel axle 311D having a bent portion.

On the other hand, a right through hole 825D extends so as to intersect the right telescoping axis ER perpendicularly. In this case, the inclination angle of the right front wheel 32 described above can be realized by the right wheel axle 321D having a bent portion.

The configuration of this modified example can also be applied to the vehicle 1B according to the second modified example which has been described by reference to Fig. 10 and the vehicle 1C according to the third modified example which has been described by reference to Fig. 11.

In the embodiment described above, the left rear telescopic element 722 of the left shock absorbing device 72 serves as the left shock absorber, and the left front telescopic element 721 restricts the relative turning of the left rear outer tube 722a and the left rear inner tube 722b. However, it is possible to adopt a configuration in which the left front telescopic element 721 serves as the left shock absorber, and the left rear telescopic element 722 restricts the relative turning of the left front outer tube 721a and the left front inner tube 721b.

In the embodiment described above, the right rear telescopic element 822 of the right shock absorbing device 82 serves as the right shock absorber, and the right front telescopic element 821 restricts the relative turning of the right rear outer tube 822a and the right rear inner tube 822b. However, it is possible to adopt a configuration in which the right front telescopic element 821 serves as the right shock absorber, and the right rear telescopic element 822 restricts the relative turning of the right front outer tube 821a and the right front inner tube 821b.

In the embodiment described above, the left front outer tube 721a and the left rear outer tube 722a are supported on the left bracket 71. However, a configuration can be adopted in which the left front inner tube 721b and the left rear inner tube 722b are supported on the left bracket 71.

In the embodiment described above, the right front outer tube 821a and the right rear outer tube 822a are supported on the right bracket 81. However, a configuration can be adopted in which the right front inner tube 821b and the right rear inner tube 822b are supported on the right bracket 81.

In the embodiment described above, the vehicle 1 comprises the single rear wheel 4. However, the vehicle 1 may comprise a plurality of rear wheels.

A configuration may be adopted in which the link mechanism 5 comprises a cross member other than the upper cross member 51 and the lower cross member 52. The "upper cross member" and the "lower cross member" are merely so called based on their relative positional relationship in the up-down direction. The "upper cross member" is not intended to imply an uppermost cross member in the link mechanism 5. The "upper cross member" implies a cross member which lies above another cross member. The "lower cross member" is not intended to imply a lowermost cross member in the link mechanism 5. The "lower cross member" implies a cross member which lies below another cross member.

In the embodiment described above, the upper cross member 51 is the single plate-shaped member, while the lower cross member 52 comprises the front element 521 and the rear element 522. However, a configuration can be adopted in which the upper cross member 51 also comprises a front element and a rear element. A configuration can be adopted in which at least one of the upper cross member 51 and the lower cross member 52 comprises a left plate member that is supported on the link supporting portion 212 and the left side member 53 as well as a right plate member that is supported on the link supporting portion 212 and the right side member 54.

In the above embodiment, the handlebar 61 is made up of the single member that extends in the left-right direction of the body frame 21. However, a configuration can be adopted in which the handlebar 61 is made up of a left handlebar portion configured to be operated by the left hand of the rider and a right handlebar portion configured to be operated by the right hand of the rider that are provided as separate individual members, as long as steering force to turn the left front wheel 31 and the right front wheel 32 can be inputted through the handlebar 61.

In the above embodiment, the steering force transmission mechanism 9 includes the intermediate transmission plate 93, the left transmission plate 94, the right transmission plate 95, the intermediate joint 96, the left joint 97, the right joint 98, and the tie rod 99. However, the intermediate transmission plate 93, the left transmission plate 94, the right transmission plate 95, the intermediate joint 96, the left joint 97, and the right joint 98 can be replaced by appropriate mechanisms such as universal joints as required, as long as the steering force inputted from the handlebar 61 can be transmitted to the left suspension device 7 and the right suspension device 8 by way of the tie rod 99.

The terms and expressions that are used in this description are used to describe the embodiment of the disclosed concept and hence should not be construed as limiting the scope of the invention. It should be understood that any equivalents to the characteristic matters that are shown and described in this description should not be excluded and that various modifications made within the scope of claims to be made later are permitted.

When used in this description, the word "parallel" means that two straight lines which do not intersect each other as members while they are inclined at an angle falling within the range of ± 40 degrees are comprised therein. When used in this description to depict directions and members, the expression reading "along a certain direction" means that a case where something inclines at an angle falling within the range of ± 40 degrees relative to the certain direction is comprised therein. When used in this description, the expression reading "something extends in a certain direction" means that a case where something extends while being inclined at an angle falling within the range of ± 40 degrees relative to the certain direction is comprised therein.

When used in this description, the expression "so as not to be movable relative to the body frame 21" means that a certain part or member is caused to lean in the left-right direction of the vehicle 1 together with the body frame 21 when the body frame 21 is caused to lean in the left-right direction of the vehicle 1. When used in this description, the expression "so as not to be movable relative to the body frame 21" may comprehend not only a case where a certain part or member is directly fixed to the body frame but also a case where the certain part of member is fixed to a vehicle component (a fuel tank, a bracket, the power unit 24, etc.) which is fixed on the body frame 21. Here the term "fixed" may comprehend a case that a certain part or member is fixed by way of a damping member or the like.

The disclosed concept can be implemented with many different embodiments. This description should be understood to provide a principle embodiment of the disclosed concept. The preferred embodiment which is at least described or illustrated in this description is so described or illustrated based on the understanding that the embodiment is not intended to limit the disclosed concept.

The limitative matters of claims should be construed widely based on terms used in the claims and hence should not be limited by the embodiment described in this specification or the prosecution of this patent application. Those embodiments should be construed as non-exclusive. For example, in this description, the terms "preferable" and "may" should be construed as being non-exclusive, and those terms mean, respectively, that it is "preferable but not limited thereto" and that it "may be acceptable but not limited thereto."

## Claims

1. A vehicle (1) comprising:
a body frame (21);
a left front wheel (31) and a right front wheel (32) that are arranged side by side in a left-right direction of the body frame (21);
a link mechanism (5) disposed above the left front wheel (31) and the right front wheel (32) in an up-down direction of the body frame (21), and configured to change positions of the left front wheel (31) and the right front wheel (32) relative to the body frame (21) to cause the body frame (21) to lean to left or right of the vehicle (1);
a left suspension device (7) configured to attenuate displacement motion of the left front wheel (31) relative to the link mechanism (5) in the up-down direction of the body frame (21); and
a right suspension device (8) configured to attenuate displacement motion of the right front wheel (32) relative to the link mechanism (5) in the up-down direction of the body frame (21), wherein the link mechanism (5) comprises an upper cross member (51), a lower cross member (52), a left side member (53) and a right side member (54);
wherein the upper cross member (51), the lower cross member (52), the left side member (53) and the right side member (54) are turnably connected with one another such that the upper cross member (51) and the lower cross member (52) are held in postures which are parallel to each other, and such that the left side member (53) and the right side member (54) are held in postures which are parallel to each other;
wherein the left suspension device (7) comprises:
a left shock absorbing device (72) supporting the left front wheel (31) and configured to perform a telescopic action along a left telescoping axis (EL) extending in the up-down direction of the body frame (21); and
a left coupling member (71) supporting the left shock absorbing device (7) and coupled with the left side member (53) while being configured to turn about a left steering axis extending in the up-down direction of the body frame (21);
wherein the right suspension device (8) comprises:
a right shock absorbing device (82) supporting the right front wheel (32) and configured to perform a telescopic action along a right telescoping axis (ER) extending in the up-down direction of the body frame (21); and
a right coupling member (81) supporting the right shock absorbing device (82) and coupled with the right side member (54) while being configured to turn about a right steering axis extending in the up-down direction of the body frame (21);
**characterised in that** the left front wheel (31) is inclined in such a way that an upper portion (31a) of the left front wheel (31) lies further away from the left telescoping axis (EL) than a lower portion (31d) of the left front wheel (31); and the right front wheel (32) is inclined in such a way that an upper portion (32a) of the right front wheel (32) lies further away from the right telescoping axis (ER) than a lower portion (32d) of the right front wheel (32)

2. The vehicle according to claim 1,
wherein the left front wheel (31) is inclined relative to a vertical direction;
wherein an inclination angle of the left front wheel (31) relative to the vertical direction is greater than an inclination angle of the left telescoping axis (EL) relative to the vertical direction;
wherein the right front wheel (32) is inclined relative to the vertical direction; and
wherein an inclination angle of the right front wheel (32) relative to the vertical direction is greater than an inclination angle of the right telescoping axis (ER) relative to the vertical direction.

3. The vehicle according to claim 2,
wherein the left shock absorbing device (72) is disposed on the left of the left front wheel (31) in the left-right direction of the body frame (21); and
wherein the right shock absorbing device (82) is disposed on the right of the right front wheel (32) in the left-right direction of the body frame (21).

4. The vehicle according to claim 2,
wherein the left shock absorbing device (72) is disposed on the right of the left front whee (31) in the left-right direction of the body frame (21); and
wherein the right shock absorbing device (82) is disposed on the left of the right front wheel (32) in the left-right direction of the body frame (21).

5. The vehicle according to claim 1,
wherein the left telescoping axis (EL) is inclined relative to a vertical direction; wherein an inclination angle of the left telescoping axis (EL) relative to the vertical direction is greater than an inclination angle of the left front wheel (31) relative to the vertical direction;
wherein the right telescoping axis (ER) is inclined relative to the vertical direction; and
wherein an inclination angle of the right telescoping axis (ER) relative to the vertical direction is greater than an inclination angle of the right front wheel (32) relative to the vertical direction.

6. The vehicle according to any one of claims 1 to 5,
wherein the left shock absorbing device (72) is formed with a left through hole (725) supporting a left wheel axle (311) rotatably;
wherein the left through hole (725) extends so as to intersect the left telescoping axis (EL) non-perpendicutarly when viewed from a front-rear direction of the body frame;
wherein the right shock absorbing device (82) is formed with a right through hole (825) supporting a right wheel axle (321) rotatably; and
wherein the right through hole (825) extends so as to intersect the right telescoping axis (ER) non-perpendicularly when viewed from the front-rear direction of the body frame.

7. The vehicle according to any one of claims 1 to 6,
wherein the left shock absorbing device (72) comprises a left upper portion (722a.) and a left lower portion (722b) that are configured to perform relative displacement along the left telescoping axis (EL);
wherein the left shock absorbing device (72) further comprises:
a left guide portion (721a) coupled with one of the left upper portion (722a) and the left lower portion (722b); and
a left guided portion (721b) coupled with the other one of the left upper portion (722a) and the left lower portion (722b), and configured to displace relative to the left guide portion (721a) in a direction parallel to the left telescoping axis (EL),
wherein the left guide portion (722a) and the left guided portion (721b) are configured to restrict relative turning of the left upper portion (722a) and the left lower portion (722b);
wherein the right shock absorbing device (82) comprises a right upper portion (822a) and a right lower portion (822b) that are configured to perform relative displacement along the right telescoping axis (ER);
wherein the right shock absorbing device (82) further comprises:
a right guide portion (821a) coupled with one of the right upper portion (822a) and the right lower portion (822b); and
a right guided portion (821b) coupled with the other one of the right upper portion (822a) and the right lower portion (822b), and configured to displace relative to the right guide portion (821a) in a direction parallel to the right telescoping axis (ER); and
wherein the right guide portion (821a) and the right guided portion (821b) are configured to restrict relative turning of the right upper portion (822a) and the right lower portion (822b).

8. The vehicle according to any one of claims 1 to 7,
wherein a ground contact surface of the left front wheel (31) is curved relative to a direction parallel to a left wheel axle (311) of the left front wheel; and
wherein a ground contact surface of the right front wheel (32) is curved relative to a direction parallel to a right wheel axle (321) of the right front wheel.

## Patentansprüche

1. Ein Fahrzeug (1), das umfasst:
einen Körper-Rahmen (21);
ein linkes Vorder-Rad (31) und ein rechtes Vorder-Rad (32), die Seite an Seite in einer Links-Rechts-Richtung von dem Körper-Rahmen (21) angeordnet sind;
einen Lenker-Mechanismus (5), der oberhalb des linken Vorder-Rads (31) und des rechten Vorder-Rads (32), in einer Oben-Unten-Richtung von dem Körper-Rahmen (21), positioniert ist, und konfiguriert ist, um eine Position von dem linken Vorder-Rad (31) und dem rechten Vorder-Rad (32) relativ zu dem Körper-Rahmen (21) zu ändern, um zu bewirken, dass der Körper-Rahmen (21) sich nach links oder rechts von dem Fahrzeug (1) neigt;
eine linke Aufhängungs-Vorrichtung (7), die konfiguriert ist eine Verlagerungs-Bewegung von dem linken Vorder-Rad (31) relativ zu dem Lenker-Mechanismus (5) in der Oben-Unten-Richtung von dem Körper-Rahmen (21) zu dämpfen;
eine rechte Aufhängungs-Vorrichtung (8), die konfiguriert ist um eine Verlagerungs-Bewegung von dem rechten Vorder-Rad (32) relativ zu dem Lenker-Mechanismus (5) in der Oben-Unten-Richtung von dem Körper-Rahmen (21) zu dämpfen,
wobei der Lenker-Mechanismus (5) ein oberes Quer-Element (51), ein unteres Quer-Element (52), ein Links-Seiten-Element (53) und ein Rechts-Seiten-Element (54) umfasst,
wobei das obere Quer-Element (51), das untere Quer-Element (52), das Links-Seiten-Element (53) und das Rechts-Seiten-Element (54) drehbar miteinander verbunden sind, so dass das obere Quer-Element (51) und das untere Quer-Element (52) in Positionen gehalten sind, die parallel zueinander sind, und so dass das Links-Seiten-Element (53) und das Rechts-Seiten-Element (54) in Positionen gehalten sind, die parallel miteinander sind;
wobei die linke Aufhängungs-Vorrichtung (7) umfasst:
eine linke Stoß-Dämpfungs-Vorrichtung (72), die das linke Vorder-Rad (31) lagert, und konfiguriert ist, um eine Teleskop-Aktion entlang einer linken Teleskop-Achse (EL) auszuführen, die sich in der Oben-Unten-Richtung von dem Körper-Rahmen (21) erstreckt; und
ein linkes Kopplungs-Element (71), das die linke Stoß-Dämpfungs-Vorrichtung (7) lagert und mit dem Links-Seiten-Element (53) gekoppelt ist, während es konfiguriert ist, sich um eine linke Lenk-Achse zu drehen, die sich in der Oben-Unten-Richtung von dem Körper-Rahmen (21) erstreckt;
wobei die rechte Aufhängungs-Vorrichtung (8) umfasst:
eine rechte Stoß-Dämpfungs-Vorrichtung (82), die das rechte Vorder-Rad (32) lagert, und konfiguriert ist, um eine Teleskop-Aktion entlang einer rechten Teleskop-Achse (ER) durchzuführen, die sich in der Oben-Unten-Richtung von dem Körper-Rahmen (21) erstreckt; und
ein rechtes Kopplungs-Element (81), das die rechte Stoß-Dämpfungs-Vorrichtung (82) lagert und mit dem Rechts-Seiten-Element (54) gekoppelt ist, während es konfiguriert ist, sich um eine rechte Lenk-Achse zu drehen, die sich in der Oben-Unten-Richtung von dem Körper-Rahmen (21) erstreckt;
**dadurch gekennzeichnet, dass** das linke Vorder-Rad (31) in so einer Weise geneigt ist, dass ein oberer Abschnitt (31a) von dem linken Vorder-Rad (31) weiter entfernt von der linken Teleskop-Achse (EL) liegt als ein unterer Abschnitt (31d) von dem linken Vorder-Rad (31); und
das rechte Vorder-Rad (32) in so einer Weise geneigt ist, dass ein oberer Abschnitt (32a) von dem rechten Vorder-Rad (32) weiter entfernt von der rechten Teleskop-Achse (ER) liegt als ein unterer Abschnitt (32d) von dem rechten Vorder-Rad (32).

2. Das Fahrzeug gemäß zu Anspruch 1,
wobei das linke Vorder-Rad (31) relativ zu einer Vertikal-Richtung geneigt ist; wobei ein Neigungs-Winkel von dem linken Vorder-Rad (31) relativ zu der Vertikal-Richtung größer ist als ein Neigungs-Winkel von der linken Teleskop-Achse (EL) relativ zu der Vertikal-Richtung;
wobei das rechte Vorder-Rad (32) relativ zu der Vertikal-Richtung geneigt ist; und wobei ein Neigungs-Winkel von dem rechten Vorder-Rad (32) relativ zu der Vertikal-Richtung größer ist als ein Neigungs-Winkel von der rechten Teleskop-Achse (ER) relativ zu der Vertikal-Richtung.

3. Das Fahrzeug gemäß zu Anspruch 2,
wobei die linke Stoß-Dämpfungs-Vorrichtung (32) links von dem linken Vorder-Rad (31) in der Links-Rechts-Richtung von dem Körper-Rahmen (21) positioniert ist; und wobei die rechte Stoß-Dämpfungs-Vorrichtung (82) rechts von dem rechten Vorder-Rad (32) in der Links-Rechts-Richtung von dem Körper-Rahmen (21) positioniert ist.

4. Das Fahrzeug gemäß zu Anspruch 2,
wobei die linke Stoß-Dämpfungs-Vorrichtung (72) rechts von dem linken Vorder-Rad (31) in der Links-Rechts-Richtung von dem Körper-Rahmen (21) positioniert ist; und wobei die rechte Stoß-Dämpfungs-Vorrichtung (82) links von dem rechten Vorder-Rad (32) in der Links-Rechts-Richtung von dem Körper-Rahmen (21) positioniert ist.

5. Das Fahrzeug gemäß zu Anspruch 1,
wobei die linke Teleskop-Achse (EL) relativ zu einer Vertikal-Richtung geneigt ist; wobei ein Neigungs-Winkel von der linken Teleskop-Achse (EL) relativ zu der Vertikal-Richtung größer ist als ein Neigungs-Winkel von dem linken Vorder-Rad (31) relativ zu der Vertikal-Richtung;
wobei die rechte Teleskop-Achse (ER) relativ zu der Vertikal-Richtung geneigt ist; und
wobei ein Neigungs-Winkel von der rechten Teleskop-Achse (ER) relativ zu der Vertikal-Richtung größer ist als ein Neigungs-Winkel von dem rechten Vorder-Rad (32) relativ zu der Vertikal-Richtung.

6. Das Fahrzeug gemäß zu irgendeinem der Ansprüche 1 bis 5,
wobei die linke Stoß-Dämpfungs-Vorrichtung (72) mit einem linken Durchgangs-Loch (725) ausgebildet ist, das eine linke Rad-Achse (311) drehbar lagert;
wobei das linke Durchgangs-Loch (725) sich so erstreckt, dass es die linke Teleskop-Achse (EL) nicht-senkrecht schneidet, wenn von einer Vorder-Rück-Richtung von dem Körper-Rahmen betrachtet;
wobei die rechte Stoß-Dämpfungs-Vorrichtung (82) mit einem rechten Durchgangs-Loch (825) ausgebildet ist, das eine rechte Rad-Achse (321) drehbar lagert; und wobei das rechte Durchgangs-Loch (825) sich so erstreckt, dass es die rechte Teleskop-Achse (ER) nicht-senkrecht schneidet, wenn von der Vorder-Rück-Richtung von dem Körper-Rahmen betrachtet.

7. Das Fahrzeug gemäß zu irgendeinem der Ansprüche 1 bis 6,
wobei die linke Stoß-Dämpfungs-Vorrichtung (72) einen linken oberen Abschnitt (722a) und einen linken unteren Abschnitt (722b) umfasst, die konfiguriert sind, um eine relative Verlagerung entlang der linken Teleskop-Achse (EL) durchzuführen; wobei die linke Stoß-Dämpfungs-Vorrichtung (72) weiter umfasst:
einen linken Führungs-Abschnitt (721a), der mit einem von dem linken oberen Abschnitt (722a) und dem linken unteren Abschnitt (722b) gekoppelt ist; und
einen linken geführten Abschnitt (721b), der mit dem anderen von dem linken oberen Abschnitt (722a) und dem linken unteren Abschnitt (722b) gekoppelt ist, und
konfiguriert ist, um sich relativ zu dem linken Führungs-Abschnitt (721A) in einer Richtung, parallel zu der linken Teleskop-Achse (EL), zu verlagern;
wobei der linke Führungs-Abschnitt (722a) und der linke geführte Abschnitt (721b) konfiguriert sind, eine relative Drehung von dem linken oberen Abschnitt (722a) und dem linken unteren Abschnitt (722b) zu beschränken;
wobei die rechte Stoß-Dämpfungs-Vorrichtung (82) einen rechten oberen Abschnitt (822a) und einen rechten unteren Abschnitt (822b) umfasst, die konfiguriert sind, um eine relative Verlagerung entlang der rechten Teleskop-Achse (ER) durchzuführen;
wobei die rechte Stoß-Dämpfungs-Vorrichtung (82) weiter umfasst:
einen rechten Führungs-Abschnitt (821a), der mit einem von dem rechten oberen Abschnitt (822a) und dem rechten unteren Abschnitt (822b) gekoppelt ist; und einen rechten geführten Abschnitt (821b), der mit dem anderen von dem rechten oberen Abschnitt (822a) und dem rechten unteren Abschnitt (822b) gekoppelt ist und konfiguriert ist, um sich relativ zu dem rechten Führungs-Abschnitt (821a) in einer Richtung, parallel zu der rechten Teleskop-Achse (ER), zu verlagern;
wobei der rechte Führungs-Abschnitt (821a) und der rechte geführte Abschnitt (821b) konfiguriert sind, um eine relative Drehung von dem rechten oberen Abschnitt (822a) und dem rechten unteren Abschnitt (822b) zu beschränken.

8. Das Fahrzeug gemäß zu irgendeinem der Ansprüche 1 bis 7,
wobei eine Boden-Kontakt-Fläche von dem linken Vorder-Rad (31), relativ zu einer Richtung, parallel zu der linken Rad-Achse (311) von dem linken Vorder-Rad, gekrümmt ist; und
wobei eine Boden-Kontakt-Fläche von dem rechten Vorder-Rad (32), relativ zu einer Richtung, parallel zu der rechten Rad-Achse (321) von dem rechten Vorder-Rad, gekrümmt ist.

## Revendications

1. Véhicule (1) comprenant :
un corps de châssis (21) ;
une roue avant gauche (31) et une roue avant droite (32) qui sont agencées côte à côte en direction gauche-droite du corps de châssis (21) ;
un mécanisme de liaison (5) disposé au-dessus de la roue avant gauche (31) et de la roue avant droite (32) en direction haut-bas du corps de châssis (21), et configuré pour changer les positions de la roue avant gauche (31) et de la roue avant droite (32) par rapport au corps de châssis (21) pour que le corps de châssis (21) se penche vers la gauche ou vers la droite du véhicule (1) ;
un dispositif de suspension gauche (7) configuré pour atténuer un mouvement de déplacement de la roue avant gauche (31) par rapport au mécanisme de liaison (5) en direction haut-bas du corps de châssis (21) ; et
un dispositif de suspension droit (8) configuré pour atténuer un mouvement de déplacement de la roue avant droite (32) par rapport au mécanisme de liaison (5) en direction haut-bas du corps de châssis (21),
dans lequel le mécanisme de liaison (5) comprend un élément d'entretoise supérieur (51), un élément d'entretoise inférieur (52), un élément côté gauche (53) et un élément côté droit (54) ;
dans lequel l'élément d'entretoise supérieur (51), l'élément d'entretoise inférieur (52), l'élément côté gauche (53) et l'élément côté droit (54) sont connectés entre eux de manière tournante de telle sorte que l'élément d'entretoise supérieur (51) et l'élément d'entretoise inférieur (52) sont maintenus dans des postures parallèles entre elles, et de telle sorte que l'élément côté gauche (53) et l'élément côté droit (54) sont maintenus dans des postures parallèles entre elles ;
dans lequel le dispositif de suspension gauche (7) comprend :
un dispositif amortisseur gauche (72) supportant la roue avant gauche (31) et configuré pour mettre en œuvre une action télescopique le long d'un axe télescopique gauche (EL) qui s'étend en direction haut-bas du corps de châssis (21) ; et
un élément d'accouplement gauche (71) supportant le dispositif amortisseur gauche (7) et couplé à l'élément côté gauche (53) tout en étant configuré pour tourner autour d'un axe de direction gauche qui s'étend en direction haut-bas du corps de châssis (21) ;
dans lequel le dispositif de suspension droit (8) comprend :
un dispositif amortisseur droit (82) supportant la roue avant droite (32) et configuré pour mettre en œuvre une action télescopique le long d'un axe télescopique droit (ER) qui s'étend en direction haut-bas du corps de châssis (21) ; et
un élément d'accouplement droit (81) supportant le dispositif amortisseur droit (82) et couplé à l'élément côté droit (54) tout en étant configuré pour tourner autour d'un axe de direction droit qui s'étend en direction haut-bas du corps de châssis (21) ;
**caractérisé en ce que** la roue avant gauche (31) est inclinée de telle sorte qu'une portion supérieure (31a) de la roue avant gauche (31) est plus éloignée de l'axe télescopique gauche (EL) qu'une portion inférieure (31d) de la roue avant gauche (31) ; et
la roue avant droite (32) est inclinée de telle sorte qu'une portion supérieure (32a) de la roue avant droite (32) est plus éloignée de l'axe télescopique droit (ER) qu'une portion inférieure (32d) de la roue avant droite (32).

2. Véhicule selon la revendication 1,
dans lequel la roue avant gauche (31) est inclinée par rapport à une direction verticale ;
dans lequel un angle d'inclinaison de la roue avant gauche (31) par rapport à la direction verticale est supérieur à un angle d'inclinaison de l'axe télescopique gauche (EL) par rapport à la direction verticale ;
dans lequel la roue avant droite (32) est inclinée par rapport à la direction verticale ; et
dans lequel un angle d'inclinaison de la roue avant droite (32) par rapport à la direction verticale est supérieur à un angle d'inclinaison de l'axe télescopique droit (ER) par rapport à la direction verticale.

3. Véhicule selon la revendication 2,
dans lequel le dispositif amortisseur gauche (72) est disposé sur la gauche de la roue avant gauche (31) en direction gauche-droite du corps de châssis (21) ; et
dans lequel le dispositif amortisseur droit (82) est disposé sur la droite de la roue avant droite (32) en direction gauche-droite du corps de châssis (21).

4. Véhicule selon la revendication 2,
dans lequel le dispositif amortisseur gauche (72) est disposé sur la droite de la roue avant gauche (31) en direction gauche-droite du corps de châssis (21) ; et
dans lequel le dispositif amortisseur droit (82) est disposé sur la gauche de la roue avant droite (32) en direction gauche-droite du corps de châssis (21).

5. Véhicule selon la revendication 1,
dans lequel l'axe télescopique gauche (EL) est incliné par rapport à une direction verticale ;
dans lequel un angle d'inclinaison de l'axe télescopique gauche (EL) par rapport à la direction verticale est supérieur à un angle d'inclinaison de la roue avant gauche (31) par rapport à la direction verticale ;
dans lequel l'axe télescopique droit (ER) est incliné par rapport à la direction verticale ; et
dans lequel un angle d'inclinaison de l'axe télescopique droit (ER) par rapport à la direction verticale est supérieur à un angle d'inclinaison de la roue avant droite (32) par rapport à la direction verticale.

6. Véhicule selon l'une quelconque des revendications 1 à 5,
dans lequel le dispositif amortisseur gauche (72) est formé avec un trou traversant gauche (725) supportant un essieu de roue gauche (311) de manière rotative ;
dans lequel le trou traversant gauche (725) s'étend de manière à intersecter l'axe télescopique gauche (EL) de manière non perpendiculaire vu en direction avant-arrière du corps de châssis ;
dans lequel le dispositif amortisseur droit (82) est formé avec un trou traversant droit (825) supportant un essieu de roue droite (321) de manière rotative ; et
dans lequel le trou traversant droit (825) s'étend de manière à intersecter l'axe télescopique droit (ER) de manière non perpendiculaire vu en direction avant-arrière du corps de châssis.

7. Véhicule selon l'une quelconque des revendications 1 à 6,
dans lequel le dispositif amortisseur gauche (72) comprend une portion supérieure gauche (722a) et une portion inférieure gauche (722b) qui sont configurées pour mettre en œuvre un déplacement relatif selon l'axe télescopique gauche (EL) ;
dans lequel le dispositif amortisseur gauche (72) comprend en outre :
une portion guide gauche (721a) couplée à une portion parmi la portion supérieure gauche (722a) et la portion inférieure gauche (722b) ; et
une portion guidée gauche (721b) couplée à l'autre portion parmi la portion supérieure gauche (722a) et la portion inférieure gauche (722b), et configurée pour se déplacer par rapport à la portion guide gauche (721a) dans une direction parallèle à l'axe télescopique gauche (EL) ;
dans lequel la portion guide gauche (721a) et la portion guidée gauche (721b) sont configurées pour restreindre le pivotement relatif de la portion supérieure gauche (722a) et de la portion inférieure gauche (722b) ;
dans lequel le dispositif amortisseur droit (82) comprend une portion supérieure droite (822a) et une portion inférieure droite (822b) qui sont configurées pour mettre en œuvre un déplacement relatif selon l'axe télescopique droit (ER) ;
dans lequel le dispositif amortisseur droit (82) comprend en outre :
une portion guide droite (821a) couplée à une portion parmi la portion supérieure droite (822a) et la portion inférieure droite (822b) ; et
une portion guidée droite (821b) couplée à l'autre portion parmi la portion supérieure droite (822a) et la portion inférieure droite (822b), et configurée pour se déplacer par rapport à la portion guide droite (821a) dans une direction parallèle à l'axe télescopique droit (ER) ; et
dans lequel la portion guide droite (821a) et la portion guidée droite (821b) sont configurées pour restreindre le pivotement relatif de la portion supérieure droite (822a) et de la portion inférieure droite (822b).

8. Véhicule selon l'une quelconque des revendications 1 à 7,
dans lequel une surface de contact au sol de la roue avant gauche (31) est incurvée par rapport à une direction parallèle à un essieu de roue gauche (311) de la roue avant gauche (32) ; et
dans lequel une surface de contact au sol de la roue avant droite (32) est incurvée par rapport à une direction parallèle à un essieu de roue droite (321) de la roue avant droite.
